# EUROPÄISCHE PATENTSCHRIFT

(11) **EP 3 077 239 B1**
(45) Veröffentlichungstag und Bekanntmachung des Hinweises auf die Patenterteilung: **24.10.2018**
(21) Anmeldenummer: 14793575.3
(22) Anmeldetag: 06.11.2014
(51) Int. Cl.: B60K 6/48, B60K 6/445, B60K 6/365, B60K 6/547, F16H 3/72

(54) **GETRIEBE, HYBRIDANTRIEBSSTRANG UND ANTRIEBSSTRANG FÜR ELEKTROFAHRZEUG**
TRANSMISSION, HYBRID DRIVETRAIN AND DRIVETRAIN FOR AN ELECTRIC VEHICLE
BOÎTE DE VITESSES, CHAÎNE CINÉMATIQUE HYBRIDE ET CHAÎNE CINÉMATIQUE POUR VÉHICULE AUTOMOBILE

(30) Priorität: 06.12.2013 DE 102013225211; 20.12.2013 DE 102013226963
(43) Veröffentlichungstag der Anmeldung: 12.10.2016
(73) Patentinhaber: ZF Friedrichshafen AG, 88046 Friedrichshafen (DE)
(72) Erfinder: ZIEMER, Peter, 88069 Tettnang (DE); KUBERCZYK, Raffael, 88212 Ravensburg (DE); SIBLA,Christian, 88097 Eriskirch (DE); BEISSWENGER, Andreas, 88326 Aulendorf (DE); MÜNCH, Eckehard, 32257 Bünde (DE)
(86) Internationale Anmeldenummer: PCT/EP2014/073872
(87) Internationale Veröffentlichungsnummer: WO 2015/082164

(56) Entgegenhaltungen:
- DE-A1-102004 042 007
- DE-A1-102008 051 305
- DE-A1-102012 201 369
- DE-A1-102012 201 377

## Beschreibung

Die Erfindung betrifft ein Getriebe mit einer Getriebe-Eingangswelle und einer Getriebe-Ausgangswelle, einem Hauptradsatz, einem Zusatzradsatz und einer elektrischen Maschine mit einem Rotor und einem Stator, wobei das Getriebe einen ersten Leistungspfad und einen zweiten Leistungspfad zwischen der Getriebe-Eingangswelle und dem Hauptradsatz aufweist, wobei der Hauptradsatz einen ersten und einen zweiten Planetenradsatz mit insgesamt vier in Drehzahlordnung als erste, zweite, dritte und vierte Welle bezeichnete Wellen aufweist, wobei der erste Leistungspfad über ein erstes Schaltelement mit der vierten Welle des Hauptradsatzes und über ein zweites Schaltelement mit der zweiten Welle des Hauptradsatzes verbindbar ist, wobei der zweite Leistungspfad über ein drittes Schaltelement mit der ersten Welle des Hauptradsatzes und über ein viertes Schaltelement mit der zweiten Welle des Hauptradsatzes verbindbar ist, wobei die dritte Welle des Hauptradsatzes mit der Getriebe-Ausgangswelle verbunden ist, wobei der Zusatzradsatz einen Planetenradsatz mit einer ersten, zweiten und dritten Welle aufweist, und wobei die erste Welle des Zusatzradsatzes mit dem Rotor ständig verbunden ist. Die Erfindung betrifft außerdem einen Antriebsstrang für ein Kraftfahrzeug mit einem Getriebe.

Ein Getriebe bezeichnet hier insbesondere ein mehrgängiges Getriebe, bei dem eine vordefinierte Anzahl an Gängen, also festen Übersetzungsverhältnissen zwischen einer Getriebe-Eingangswelle und einer Getriebe-Ausgangswelle, durch Schaltelemente automatisch schaltbar ist. Unter bestimmten Voraussetzungen kann ein derartiges Getriebe auch über ein variables Übersetzungsverhältnis zwischen Getriebe-Eingangswelle und Getriebe-Ausgangswelle verfügen. Bei den Schaltelementen handelt es sich hier beispielsweise um Kupplungen oder Bremsen. Derartige Getriebe finden vor allem in Kraftfahrzeugen Anwendung, um das Drehzahl- und Drehmomentabgabevermögen der Antriebseinheit den Fahrwiderständen des Fahrzeugs in geeigneter Weise anzupassen.

Aus der gattungsbildenden Patentanmeldung DE 10 2012 201 377 A1 der Anmelderin ist ein Getriebe mit einer Getriebeeingangswelle und einer Getriebeausgangswelle und zwei Leistungspfaden zwischen der Getriebeeingangswelle und einem Hauptradsatz mit zwei Einzelplanetenradsätzen mit vier in Drehzahlordnung als erste, zweite, dritte und vierte Welle bezeichneten Wellen bekannt, wobei die dritte der vier Wellen mit der Getriebeausgangswelle verbunden ist. Eine Elektromaschine ist über ein Planetengetriebe an der ersten Welle des Hauptradsatzes angebunden.

Aufgabe der Erfindung ist es, das Lastschaltverhalten des im Stand der Technik bekannten Getriebes zu verbessern.

Eine weitere Aufgabe der Erfindung ist es, den Einsatzbereich des Getriebes zu verbessern, sodass die elektrische Maschine in jedem Gang dazu in der Lage ist mechanische Leistung von der Getriebe-Ausgangswelle aufzunehmen oder auf diese abzugeben.

Die Aufgaben werden gelöst durch die Merkmale des Patentanspruchs 1, wobei sich vorteilhafte Ausgestaltungen aus den Unteransprüchen, der Beschreibung sowie aus den Figuren ergeben.

Das Getriebe umfasst wenigstens eine Getriebe-Eingangswelle und eine Getriebe-Ausgangswelle, einen Hauptradsatz, einen Zusatzradsatz, und eine elektrische Maschine mit einem Rotor und einem Stator.

Der Hauptradsatz weist einen ersten und einen zweiten Planetenradsatz mit insgesamt vier in Drehzahlordnung als erste, zweite, dritte und vierte Welle bezeichnete Wellen auf. Der Hauptradsatz ist somit als ein Zwei-Steg-Vier-Wellen-Getriebe ausgebildet. Der Zusatzradsatz weist einen Planetenradsatz mit insgesamt drei als erste, zweite, und dritte Welle bezeichnete Wellen auf. Die erste Welle des Zusatzradsatzes ist mit dem Rotor ständig verbunden.

Unter einem Zwei-Steg-Vier-Wellen-Getriebe ist ein Planetengetriebe zu verstehen, das aus zwei über genau zwei Koppelwellen kinematisch miteinander gekoppelten Einzel-Planetenradsätzen gebildet ist und bei dem vier seiner Elemente ("Wellen") für andere Getriebeelemente frei zugänglich sind. Eine Koppelwelle ist dabei als ständige mechanische Verbindung zwischen einem Element - also Sonnenrad oder Steg oder Hohlrad - des ersten Einzel-Planetenradsatzes mit einem Element - also Sonnenrad oder Steg oder Hohlrad - des zweiten Einzel-Planetenradsatzes definiert. Die Anzahl der Einzel-Planetenradsätze und die Anzahl der freien Wellen sind nicht über das optische Erscheinungsbild des Getriebes definiert, sondern über dessen Kinematik. In jedem Gang eines Zwei-Steg-Vier-Wellen-Getriebes müssen zwei der mit Elementen des Zwei-Steg-Vier-Wellen-Getriebes verbunden Schaltelemente des Getriebes geschlossen sein. Zur graphischen Darstellung der Kinematik des Getriebes wird üblicherweise ein Drehzahlplan des Getriebes verwendet, beispielsweise den aus der Getriebelehre bekannten Kutzbachplan. Bekannte Ausführungsbeispiele für ein solches Zwei-Steg-Vier-Wellen-Getriebe sind der so genannte Ravigneaux-Radsatz und der so genannte Simpson-Radsatz.

Ein reduziertes Zwei-Steg-Vier-Wellen-Getriebe ist eine Bauform eines Zwei-Steg-Vier-Wellen-Getriebes, bei dem ein Element - also ein Sonnenrad, ein Steg oder ein Hohlrad - des Getriebes eingespart ist, da ein anderes Element des Getriebes dessen Aufgabe übernimmt, ohne die Kinematik dadurch zu verändern. Dasjenige Element, welches die Funktion des eingesparten Elementes übernimmt, ist damit gleichzeitig eine der Koppelwellen des Getriebes. Ein bekanntes Ausführungsbeispiel hierfür ist der Ravigneaux-Radsatz, der entweder zwei Sonnenräder und nur ein Hohlrad aufweist oder aber zwei Hohlräder und nur ein Sonnenrad.

Das Getriebe weist zwei Leistungspfade zwischen der Getriebe-Eingangswelle und dem Hauptradsatz auf. Die beiden Leistungspfade weisen dabei ein unterschiedliches Übersetzungsverhältnis zur Getriebe-Eingangswelle auf. Das unterschiedliche Übersetzungsverhältnis wird durch einen Vorschaltradsatz erreicht, der als Planetenradsatz ausgebildet ist. Der erste Leistungspfad ist über ein erstes Schaltelement mit der vierten Welle des Hauptradsatzes und über ein zweites Schaltelement mit der zweiten Welle des Hauptradsatzes verbindbar. Der zweite Leistungspfad ist über ein drittes Schaltelement mit der ersten Welle des Hauptradsatzes und über ein viertes Schaltelement mit der zweiten Welle des Hauptradsatzes verbindbar.

Erfindungsgemäß ist die zweite Welle des Zusatzradsatzes mit der ersten oder dritten Welle des Hauptradsatzes ständig verbunden. Ist die zweite Welle des Zusatzradsatzes mit der ersten Welle des Hauptradsatzes verbunden, so ist die dritte Welle des Zusatzradsatzes mit der dritten oder vierten Welle des Hauptradsatzes ständig verbunden. Ist die zweite Welle des Zusatzradsatzes mit der dritten Welle des Hauptradsatzes verbunden, so ist die dritte Welle des Zusatzradsatzes mit der vierten Welle des Hauptradsatzes ständig verbunden.

Bei Anwendung in einem Kraftfahrzeug ist die Getriebe-Eingangswelle mit einer Welle eines Antriebsaggregates verbunden oder über eine Kupplung verbindbar, sodass mechanische Leistung des Antriebsaggregats der Getriebe-Eingangswelle zuführbar ist. Das Antriebsaggregat kann sowohl als Verbrennungskraftmaschine als auch als elektrische Maschine ausgebildet sein. Die Getriebe-Ausgangswelle dient als Schnittstelle zur Übertragung mechanischer Leistung zu den Antriebsrädern des Kraftfahrzeugs.

Unter einer Welle ist nachfolgend nicht ausschließlich ein beispielsweise zylindrisches, drehbar gelagertes Maschinenelement zur Übertragung von Drehmomenten zu verstehen, sondern vielmehr sind hierunter auch allgemeine Verbindungselemente zu verstehen, die einzelne Bauteile oder Elemente miteinander verbinden, insbesondere Verbindungselemente, die mehrere Elemente drehfest miteinander verbinden.

Ein Planetenradsatz umfasst ein Sonnenrad, einen Steg und ein Hohlrad. An dem Steg drehbar gelagert sind Planetenräder, welche mit der Verzahnung des Sonnenrades und/oder mit der Verzahnung des Hohlrads kämmen. Nachfolgend beschreibt ein Minus-Radsatz einen Planetenradsatz mit einem Steg, an dem die Planetenräder drehbar gelagert sind, mit einem Sonnenrad und mit einem Hohlrad, wobei die Verzahnung zumindest eines der Planetenräder sowohl mit der Verzahnung des Sonnenrades, als auch mit der Verzahnung des Hohlrades kämmt, wodurch das Hohlrad und das Sonnenrad in entgegengesetzte Drehrichtungen rotieren, wenn das Sonnenrad bei feststehendem Steg rotiert.

Sowohl Sonnenrad als auch Hohlrad eines Planetenradsatzes können auch in mehrere Segmente aufgeteilt sein. Beispielsweise ist es denkbar, dass die Planetenräder mit zwei Sonnenräder kämmen, welche nicht miteinander verbunden sind. Die Drehzahlverhältnisse sind selbstverständlich an beiden Segmenten des Sonnenrads identisch, so als ob sie miteinander verbunden wären.

Ein Plus-Radsatz unterscheidet sich zu dem gerade beschriebenen Minus-Planetenradsatz dahingehend, dass der Plus-Radsatz innere und äußere Planetenräder aufweist, welche drehbar an dem Steg gelagert sind. Die Verzahnung der inneren Planetenräder kämmt dabei einerseits mit der Verzahnung des Sonnenrads und andererseits mit der Verzahnung der äußeren Planetenräder. Die Verzahnung der äußeren Planetenräder kämmt darüber hinaus mit der Verzahnung des Hohlrades. Dies hat zur Folge, dass bei feststehendem Steg das Hohlrad und das Sonnenrad in die gleiche Drehrichtung rotieren.

Die Standgetriebeübersetzung definiert das Drehzahlverhältnis zwischen Sonnenrad und Hohlrad eines Planetenradsatzes bei drehfestem Steg. Da sich bei einem Minus-Radsatz die Drehrichtung zwischen Sonnenrad und Hohlrad bei drehfestem Steg umkehrt, nimmt die Standgetriebeübersetzung bei einem Minus-Radsatz stets einen negativen Wert an.

Im Drehzahlplan sind in vertikaler Richtung die Drehzahlverhältnisse der einzelnen Wellen aufgetragen. Die horizontalen Abstände zwischen den Wellen ergeben sich aus den Übersetzungsverhältnissen zwischen den Wellen, sodass sich zu einem bestimmten Betriebspunkt gehörende Drehzahlverhältnisse und Drehmomentverhältnisse der Wellen durch eine Gerade verbinden lassen. Die Übersetzungsverhältnisse zwischen den Wellen ergeben sich aus den Standgetriebeübersetzungen der beteiligten Planetenradsätze. Der Drehzahlplan ist beispielsweise in Form eines Kutzbachplans darstellbar.

Vier in Drehzahlordnung als erste, zweite, dritte und vierte Welle bezeichnete Wellen sind dadurch gekennzeichnet, dass die Drehzahlen dieser Wellen in der genannten Reihenfolge linear ansteigen, abnehmen oder gleich sind. In anderen Worten ist die Drehzahl der ersten Welle kleiner gleich der Drehzahl der zweiten Welle. Die Drehzahl der zweiten Welle ist wiederum kleiner gleich der Drehzahl der dritten Welle. Die Drehzahl der dritten Welle ist kleiner gleich der Drehzahl der vierten Welle. Diese Reihenfolge ist auch reversibel, sodass die erste Welle die größte Drehzahl aufweist, während die vierte Welle eine Drehzahl annimmt die kleiner oder gleich groß wie die Drehzahl der ersten Welle ist. Zwischen den Drehzahlen aller vier Wellen besteht dabei stets ein linearer Zusammenhang.

Die Drehzahl einer oder mehrerer Wellen kann dabei auch negative Werte, oder auch den Wert Null annehmen. Die Drehzahlordnung ist daher stets auf den vorzeichenbehafteten Wert der Drehzahlen zu beziehen, und nicht auf deren Betrag.

Die Drehzahlen der vier Wellen sind dann gleich, wenn von den Elementen Hohlrad, Steg und Sonne eines der Planetenradsätze zwei dieser Elemente miteinander verbunden sind.

Eine elektrische Maschine besteht zumindest aus einem drehfesten Stator und einem drehbar gelagerten Rotor und ist in einem motorischen Betrieb dazu eingerichtet, elektrische Energie in mechanische Energie in Form von Drehzahl und Drehmoment zu wandeln, sowie in einem generatorischen Betrieb mechanische Energie in elektrische Energie in Form von Strom und Spannung zu wandeln.

Durch Schaltelemente wird, je nach Betätigungszustand, eine Relativbewegung zwischen zwei Bauteilen zugelassen oder eine Verbindung zur Übertragung eines Drehmoments zwischen den zwei Bauteilen hergestellt. Unter einer Relativbewegung ist beispielsweise eine Rotation zweier Bauteile zu verstehen, wobei die Drehzahl des ersten Bauteils und die Drehzahl des zweiten Bauteils voneinander abweichen. Darüber hinaus ist auch die Rotation nur eines der beiden Bauteile denkbar, während das andere Bauteil stillsteht oder in entgegengesetzter Richtung rotiert. Die Schaltelemente sind in der gegenständlichen Erfindung bevorzugt als Klauen-Schaltelemente ausgeführt, welche die Verbindung durch Formschluss herstellen.

Zwei Elemente werden insbesondere dann als miteinander verbunden bezeichnet, wenn zwischen den Elementen eine feste, insbesondere drehfeste Verbindung besteht. Derart verbundene Elemente drehen mit der gleichen Drehzahl. Die verschiedenen Bauteile und Elemente der genannten Erfindung können dabei über eine Welle beziehungsweise über ein geschlossenes Schaltelement oder ein Verbindungselement, aber auch direkt, beispielsweise mittels einer Schweiß-, Press- oder einer sonstigen Verbindung, miteinander verbunden sein.

Zwei Elemente werden im Weiteren als verbindbar bezeichnet, wenn zwischen diesen Elementen eine lösbare drehfeste Verbindung besteht. Wenn die Verbindung besteht, so drehen solche Elemente mit der gleichen Drehzahl.

Ein Schaltvorgang wird durch Schließen eines zuvor nicht im Leistungsfluss des Getriebes liegenden Schaltelements des Getriebes und Öffnen eines zuvor im Leistungsfluss des Getriebes liegenden Schaltelements des Getriebes bewirkt. Der Schaltvorgang kann auch unter Last, das heißt ohne vollständige Zurücknahme des Drehmoments an der Getriebe-Eingangswelle und der Getriebe-Ausgangswelle vorgenommen werden. Ein derartiger Schaltvorgang wird im Folgenden als Lastschaltung bezeichnet. Eine Voraussetzung für die Lastschaltung bei der Verwendung von Klauen-Schaltelementen ist, dass das zu lösende Schaltelement vor dem Lösen in einen zumindest nahezu lastlosen Zustand geführt wird. Die Führung in den nahezu lastlosen Zustand wird dadurch erreicht, dass das Schaltelement weitgehend drehmomentfrei gestellt wird, sodass über das Schaltelement kein oder nur ein geringes Drehmoment übertragen wird. Dazu wird durch die elektrische Maschine ein Drehmoment auf jene Welle aufgebracht, mit der das zu lösende Schaltelement eine Verbindung herstellt.

Durch die erfindungsgemäße Anbindung des Rotors an den Hauptradsatz wird erreicht, dass die Übersetzung vom Rotor zu den Wellen des Hauptradsatzes vergrößert wird. Ist die zweite Welle des Zusatzradsatzes mit der ersten Welle des Hauptradsatzes verbunden, so befindet sich die erste Welle des Hauptradsatzes durch die erfindungsgemäße Anbindung im Drehzahlplan stets zwischen der ersten Welle des Zusatzradsatzes und der zweiten Welle des Hauptradsatzes. Ist die zweite Welle des Zusatzradsatzes mit der dritten Welle des Hauptradsatzes verbunden, so kann durch geeignete Wahl der Standgetriebeübersetzung des Planetenradsatzes des Hauptradsatzes ebenso erreicht werden, dass sich die erste Welle des Hauptradsatzes im Drehzahlplan zwischen der ersten Welle des Zusatzradsatzes und der zweiten Welle des Hauptradsatzes befindet. Durch diese vergrößerte Übersetzung wird das beim Schaltvorgang vom Rotor aufzubringende Drehmoment reduziert, wodurch die elektrische Maschine kleiner und leichter aufgebaut werden kann. Derart kann die verkleinerte elektrische Maschine bei einer Lastschaltung selbst bei einem hohen Drehmoment an der Getriebe-Eingangswelle das erforderliche Drehmoment aufbringen, ohne dass es zu einer unerwünscht hohen Drehmomentreduktion an der Getriebe-Ausgangswelle kommt. Die vergrößerte Übersetzung ist zudem auch dann von Nutzen, wenn das Drehmoment der elektrischen Maschine auf die Getriebe-Ausgangswelle übertragen werden soll, beispielsweise bei Verwendung des Getriebes in einem Kraftfahrzeug, wodurch ein elektrischer Fahrbetrieb des Kraftfahrzeugs ermöglicht wird. Durch die derart vergrößerte Übersetzung ist ein Anfahren des Kraftfahrzeugs in einer Steigung selbst bei verkleinerter elektrischer Maschine möglich. Die vergrößerte Übersetzung ist zusätzlich von Nutzen, wenn ausgehend von der elektrischen Maschine ein Drehmoment auf die Getriebe-Eingangswelle übertragen wird, beispielsweise bei Anwendung zum Starten einer Verbrennungskraftmaschine, die mit der Getriebe-Eingangswelle verbunden ist. Auch hier führt die vergrößerte Übersetzung dazu, dass die elektrische Maschine kleiner und damit leichter aufgebaut werden kann.

Durch die erfindungsgemäße Zuordnung der Wellen des Hauptradsatzes zur zweiten und dritten Welle des Zusatzradsatzes wird außerdem erreicht, dass der Rotor selbst bei drehfester Festsetzung einer der Wellen des Hauptradsatzes dazu in der Lage ist, eine Drehzahl anzunehmen. Das Annehmen einer Drehzahl ist Vorrausetzung zur Aufnahme und Abgabe von mechanischer Leistung durch die elektrische Maschine. Dadurch wird ermöglicht, dass die elektrische Maschine auch in jenen Gängen dazu imstande ist mechanische Leistung aufzunehmen oder abzugeben, in der beispielsweise die erste Welle des Hauptradsatzes drehfest festgesetzt ist oder keine nennenswerte Drehzahl aufweist. Dies ist insbesondere bei Anwendung des Getriebes in einem Kraftfahrzeug vorteilhaft, da kinetische Energie des Kraftfahrzeugs durch den generatorischen Betrieb der elektrischen Maschine in jedem Gang des Getriebes rekuperiert werden kann. Ist eine Verbrennungskraftmaschine mit der Getriebe-Eingangswelle verbunden, so kann zudem der Lastpunkt der Verbrennungskraftmaschine durch generatorischen oder motorischen Betrieb der elektrischen Maschine in jedem Gang verschoben werden. Das Getriebe ermöglicht damit eine Effizienzsteigerung des Kraftfahrzeugs.

Vorzugsweise ist ein Sonnenrad des Planetenradsatzes des Zusatzradsatzes ein Bestandteil der ersten Welle des Zusatzradsatzes. Im Falle, dass der Planetenradsatz des Zusatzradsatzes als Minus-Radsatz ausgebildet ist, ist ein Steg des Planetenradsatzes des Zusatzradsatzes ein Bestandteil der zweiten Welle des Zusatzradsatzes, und ein Hohlrad des Planetenradsatzes des Zusatzradsatzes ein Bestandteil der dritten Welle des Zusatzradsatzes. Ist der Planetenradsatz des Zusatzradsatzes als Plus-Radsatz ausgebildet, so ist die Zuordnung von Hohlrad und Steg vertauscht, sodass das Hohlrad des Planetenradsatzes des Zusatzradsatzes ein Bestandteil der zweiten Welle des Zusatzradsatzes ist und der Steg des Planetenradsatzes des Zusatzradsatzes ein Bestandteil der dritten Welle des Zusatzradsatzes ist. Dadurch liegt die Drehzahl der zweiten Welle des Zusatzradsatzes stets zwischen der Drehzahl der ersten und dritten Welle des Zusatzradsatzes, sofern die genannten Elemente des Planetenradsatzes des Zusatzradsatzes nicht mit derselben Drehzahl umlaufen.

Durch die Vielzahl an gebotenen Möglichkeiten der Anbindung zwischen Rotor, Zusatzradsatz und Hauptradsatz ist die Erfindung besonders einfach an verschiedene Getriebevarianten und zur Verfügung stehenden Bauraum-Verhältnissen anpassbar.

Die erste Welle des Hauptradsatzes ist durch ein fünftes Schaltelement drehfest festsetzbar. Die vierte Welle des Hauptradsatzes ist durch ein sechstes Schaltelement drehfest festsetzbar. Durch das fünfte und sechste Schaltelement ist demnach eine feste Verbindung mit einem Getriebegehäuse des Getriebes oder mit einem anderen drehfest fixierten Bauelement des Getriebes herstellbar. Zusammen mit der Anordnung der ersten bis vierten Schaltelemente bewirkt diese Anordnung eine besonders vorteilhafte Aufteilung der einzelnen Gänge.

Die Reihenfolge der vier Wellen des Hauptradsatzes im Drehzahlplan ist abhängig von der Art und Weise, welche Wellen welchen Elementen des ersten und zweiten Planetenradsatzes des Hauptradsatzes zugeordnet sind, und welche der vier Wellen miteinander verbunden sind. Im Stand der Technik sind Beispiele dazu bekannt, jedoch haben sich bestimmte Varianten als besonders vorteilhaft für die Umsetzung in einem Getriebe hervorgetan. Diese sind insbesondere wegen einer geometrisch günstigen Anordnung, wegen einer verringerten Bauteilbelastung sowie wegen einer verbesserten Zugänglichkeit zu Schaltelementen vorteilhaft.

Gemäß einer besonders bevorzugten Variante ist die erste Welle des Hauptradsatzes mit den Sonnenrädern des ersten und zweiten Planetenradsatzes des Hauptradsatzes verbunden. Die zweite Welle des Hauptradsatzes ist mit dem Steg des zweiten Planetenradsatzes des Hauptradsatzes verbunden. Die dritte Welle des Hauptradsatzes ist mit dem Steg des ersten Planetenradsatzes und mit dem Hohlrad des zweiten Planetenradsatzes des Hauptradsatzes verbunden. Die vierte Welle des Hauptradsatzes ist mit dem Hohlrad des ersten Planetenradsatzes des Hauptradsatzes verbunden. Erster und zweiter Planetenradsatz sind dabei als Minus-Radsätze ausgebildet.

Um die Verbindung zwischen der dritten Welle des Hauptradsatzes und der Getriebe-Ausgangswelle zu vereinfachen, ist das Hohlrad des ersten Planetenradsatzes des Hauptradsatzes in ein erstes Segment und in ein zweites Segment aufgeteilt. Beide Segmente weisen vorzugsweise den gleichen Wirkdurchmesser auf, wodurch auf beide Segmente die gleichen kinematischen Bedingungen des Planetenradsatzes wirken. Beide Segmente sind Bestandteil der vierten Welle des Hauptradsatzes. Das erste Segment ist mit jenem Abschnitt der vierten Welle des Hauptradsatzes verbunden, welcher über das sechste Schaltelement drehfest festsetzbar ist. Das zweite Segment ist mit jenem Abschnitt der vierten Welle des Hauptradsatzes verbunden, welcher über das erste Schaltelement mit dem ersten Leistungspfad verbindbar ist.

Zwischen den beiden Segmenten des Hohlrads des ersten Planetenradsatzes des Hauptradsatzes führt ein Abschnitt der dritten Welle des Hauptradsatzes radial nach außen. Dadurch wird die Verbindung der dritten Welle mit der Getriebe-Ausgangswelle erleichtert, insbesondere wenn die Getriebe-Ausgangswelle koaxial zur Getriebe-Eingangswelle ist. Dies ist besonders bei der Verwendung des Getriebes im Kraftfahrzeug als Bestandteil eines längs zur Fahrtrichtung angeordneten Antriebsstrangs von Vorteil.

Vorzugsweise sind alle sechs Schaltelemente als Klauen-Schaltelemente ausgebildet, welche die Verbindung durch Formschluss herstellen. Klauen-Schaltelemente zeichnen sich durch eine vernachlässigbar geringe Verlustleistung im offenen Zustand aus, wodurch der Wirkungsgrad des Getriebes erheblich verbessert wird.

Durch selektives paarweises Eingreifen der sechs Schaltelemente sind acht Vorwärtsgänge realisierbar. Ein erster Vorwärtsgang wird durch Schließen des dritten Schaltelements und des sechsten Schaltelements gebildet. Ein zweiter Vorwärtsgang wird durch Schließen des vierten Schaltelements und des sechsten Schaltelements gebildet. Ein dritter Vorwärtsgang wird durch Schließen des dritten Schaltelements und des vierten Schaltelements gebildet. Ein vierter Vorwärtsgang wird durch Schließen des vierten Schaltelements und des ersten Schaltelements gebildet. Ein fünfter Vorwärtsgang wird durch Schließen des dritten Schaltelements und des ersten Schaltelements gebildet. Ein sechster Vorwärtsgang wird durch Schließen des zweiten Schaltelements und des ersten Schaltelements gebildet. Ein siebenter Vorwärtsgang wird durch Schließen des dritten Schaltelements und des zweiten Schaltelements gebildet. Ein achter Vorwärtsgang wird durch Schließen des fünften Schaltelements und des zweiten Schaltelements gebildet.

Ist lediglich das sechste Schaltelement geschlossen, so besteht keine Verbindung zwischen der Getriebe-Eingangswelle und der Getriebe-Ausgangswelle. Durch Betrieb der elektrischen Maschine ist derart jedoch Leistung zwischen der elektrischen Maschine und der Getriebe-Ausgangswelle übertragbar. Derart wird ein elektrischer Gang gebildet, welcher bei Rückwärts-Rotation des Rotors der elektrischen Maschine auch als Rückwärtsgang dient. Ein separater Rückwärtsgang kann somit entfallen.

Das Getriebe kann vorzugsweise Bestandteil eines Hybridantriebsstrangs eines Kraftfahrzeugs sein. Der Hybridantriebsstrang weist neben dem Getriebe auch eine Verbrennungskraftmaschine auf. Die Verbrennungskraftmaschine ist entweder direkt oder über eine Kupplung mit der Getriebe-Eingangswelle des Getriebes verbunden, bzw. verbindbar. Das Kraftfahrzeug kann dabei sowohl durch die Verbrennungskraftmaschine als auch durch die elektrische Maschine des Getriebes angetrieben werden. Optional weist das Getriebe dazu eine Zusatz-Elektromaschine auf, die dazu eingerichtet ist über ihren Rotor ein Drehmoment auf die Kurbelwelle der Verbrennungskraftmaschine abzugeben und derart die Verbrennungskraftmaschine zu starten. Dies hat den Vorteil, dass die Verbrennungskraftmaschine mittels der Zusatz-Elektromaschine gestartet werden kann, ohne Einfluss auf einen zeitgleichen elektrischen Fahrbetrieb zu nehmen, in dem das Kraftfahrzeug allein durch die elektrische Maschine des Getriebes angetrieben wird. Weist der Hybridantriebsstrang eine Kupplung zwischen Getriebe und Verbrennungskraftmaschine und eine Zusatz-Elektromaschine auf, so ist die Zusatz-Elektromaschine im Leistungsfluss vorzugsweise zwischen der Verbrennungskraftmaschine und der Kupplung angeordnet. Die Kupplung kann eine variierbare Drehmoment-Übertragungsfähigkeit aufweisen.

Die elektrische Maschine ist dabei mit einem Umformer verbunden, über den die elektrische Maschine mit einem Energiespeicher verbunden ist. Dazu ist jede Form von Energiespeicher geeignet, insbesondere elektrochemische, elektrostatische, hydraulische und mechanische Energiespeicher.

In einer weiteren Ausführungsform kann das Getriebe auch Bestandteil eines Antriebsstrangs eines Elektrofahrzeugs sein. Ein Elektrofahrzeug wird dabei allein durch eine oder mehrere Elektromaschinen angetrieben, und weist dementsprechend keine Verbrennungskraftmaschine auf. An der Getriebe-Eingangswelle ist in diesem Fall eine Traktions-Elektromaschine angebunden. Durch die verschiedenen Übersetzungsstufen des Getriebes kann die Traktions-Elektromaschine dabei stets in einem Betriebsbereich mit hohem Wirkungsgrad betrieben werden, wodurch die Energieeffizienz des gesamten Elektrofahrzeugs verbessert wird.

Ausführungsbeispiele der Erfindung sind nachfolgend anhand der beigefügten Figuren detailliert beschrieben.
- Fig. 1: zeigt schematisch ein Getriebe entsprechend einer ersten Ausführungsform der Erfindung.
- Fig. 2: zeigt einen Drehzahlplan des Getriebes entsprechend der ersten Ausführungsform.
- Fig. 3: zeigt ein Schaltschema des Getriebes entsprechend der ersten und zweiten Ausführungsform.
- Fig. 4: zeigt schematisch ein Getriebe entsprechend einer zweiten Ausführungsform der Erfindung.
- Fig. 5: zeigt schematisch ein Getriebe entsprechend einer dritten Ausführungsform der Erfindung.
- Fig. 6: zeigt einen Hybridantriebstrang eines Kraftfahrzeugs

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können.

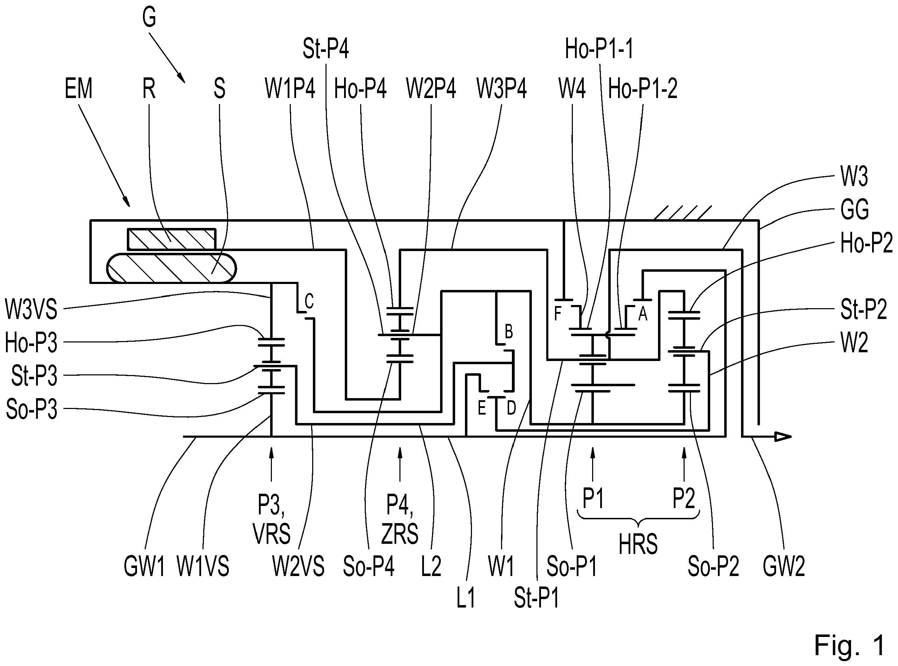

Fig. 1 zeigt schematisch ein Getriebe G entsprechend einer ersten Ausführungsform der Erfindung. Das Getriebe G weist einen Vorschaltradsatz VRS, einen Zusatzradsatz ZRS und einen Hauptradsatz HRS auf. Der Vorschaltradsatz VRS weist einen Planetenradsatz P3 auf und der Zusatzradsatz ZRS weist einen Planetenradsatz P4 auf, während der Hauptradsatz HRS einen ersten Planetenradsatz P1 und einen zweiten Planetenradsatz P2 aufweist. Sämtliche Planetenradsätze P1, P2, P3, P4 sind als Minus-Radsätze ausgebildet.

Die Darstellung des Getriebes G zeigt im Wesentlichen die verbindbaren und verbundenen Elemente des Getriebes G. Durch die in der Darstellung des Getriebes G gewählten Abstände kann nicht auf die Übersetzungsverhältnisse rückgeschlossen werden.

Eine Getriebe-Eingangswelle GW1 ist mit einem Sonnenrad So-P3 des ersten Planetenradsatzes P3 des Vorschaltradsatzes VRS verbunden, während ein Hohlrad Ho-P3 des ersten Planetenradsatzes P3 des Vorschaltradsatzes VRS drehfest mit dem Getriebegehäuse GG des Getriebes G, oder mit einem anderen drehfest fixierten Bauelement des Getriebes G verbunden ist. Derart wird ein erster und ein zweiter Leistungspfad L1, L2 gebildet, wobei sowohl durch den ersten Leistungspfad L1 als auch durch den zweiten Leistungspfad L2 Leistung von der Getriebe-Eingangswelle GW1 zum Hauptradsatz HRS übertragen werden kann. Der zweite Leistungspfad L2 leitet dabei eine im Vergleich zur Drehzahl der Getriebe-Eingangswelle GW1 veränderte Drehzahl an den Hauptradsatz HRS weiter, indem die Drehzahl an der Getriebeeingangswelle GW1 durch die Übersetzung zwischen dem Sonnenrad So-P3 und einem Steg St-P3 des ersten Planetenradsatzes P3 des Vorschaltradsatzes VRS übersetzt wird. Der erste Leistungspfad L1 leitet die Drehzahl der Getriebe-Eingangswelle GW1 ohne Übersetzung an den Hauptradsatz HRS weiter. Das Sonnenrad So-P3 des ersten Planetenradsatzes P3 des Vorschaltradsatzes VRS ist dabei Bestandteil einer ersten Welle W1 VS des Vorschaltradsatzes VRS, welche mit der Getriebe-Eingangswelle GW1 verbunden ist. Der Steg St-P3 des ersten Planetenradsatzes P3 des Vorschaltradsatzes VRS ist Bestandteil einer zweiten Welle W2VS des Vorschaltradsatzes VRS. Jenes Bauelement, an dem sich das Hohlrad Ho-P3 des ersten Planetenradsatzes P3 des Vorschaltradsatzes VRS abstützt, wird im Folgenden als dritte Welle W3VS des Vorschaltradsatzes VRS bezeichnet.

Das Sonnenrad So-P1 des ersten Planetenradsatzes P1 und das Sonnenrad So-P2 des zweiten Planetenradsatzes P2 des Hauptradsatzes HRS sind miteinander verbunden und sind Bestandteile einer ersten Welle W1 des Hauptradsatzes HRS. Ein Steg St-P1 des ersten Planetenradsatzes P1 des Hauptradsatzes HRS ist mit einem Hohlrad Ho-P2 des zweiten Planetenradsatzes P2 des Hauptradsatzes HRS verbunden und ist derart Bestandteil einer dritten Welle W3 des Hauptradsatzes HRS. Ein Hohlrad Ho-P1 des ersten Planetenradsatzes P1 des Hauptradsatzes HRS ist zweiteilig ausgeführt, und weist somit ein erstes Segment Ho-P1-1 und ein zweites Segment Ho-P1-2 auf. Beide Segmente Ho-P1-1, Ho-P1-2 sind Bestandteil einer vierten Welle W4 des Hauptradsatzes HRS. Zwischen den beiden Segmenten Ho-P1-1, Ho-P1-2 des Hohlrads Ho-P1 verläuft ein Abschnitt der dritten Welle W3 des Hauptradsatzes HRS und führt so zu einer Getriebe-Ausgangswelle GW2, welche in der dargestellten Ausführungsform koaxial zur Getriebe-Eingangswelle GW1 ist. Ein Steg St-P2 des zweiten Planetenradsatzes P2 des Hauptradsatzes HRS ist Bestandteil einer zweiten Welle W2 des Hauptradsatzes HRS. Durch diese Anordnung und Verbindung der einzelnen Bauelemente des ersten und zweiten Planetenradsatzes P1, P2 des Hauptradsatzes HRS wird die Anordnung der ersten, zweiten, dritten und vierten Welle W1, W2, W3, W4 des Hauptradsatzes HRS im Drehzahlplan bestimmt, wobei die Reihenfolge erste, zweite, dritte, vierte Welle W1, W2, W3, W4 deren Reihenfolge im Drehzahlplan entspricht.

Der erste Leistungspfad L1 ist über ein erstes Schaltelement A mit der vierten Welle W4 des Hauptradsatzes HRS und über ein zweites Schaltelement E mit der zweiten Welle W2 des Hauptradsatzes HRS verbindbar. Der zweite Leistungspfad L2 ist über ein drittes Schaltelement B mit der ersten Welle W1 des Hauptradsatzes HRS und über ein viertes Schaltelement D mit der zweiten Welle W2 des Hauptradsatzes HRS verbindbar. Die erste Welle W1 des Hauptradsatzes HRS ist durch ein fünftes Schaltelement C mit dem Getriebegehäuse GG des Getriebes G, oder mit einem anderen drehfesten Bauelement des Getriebes G verbindbar, sodass die erste Welle W1 des Hauptradsatzes HRS bei geschlossenem fünftem Schaltelement C keine Drehzahl annehmen kann. Die vierte Welle W4 des Hauptradsatzes HRS ist in gleicher Weise durch ein sechstes Schaltelement F drehfest festsetzbar, indem die vierte Welle W4 durch das sechste Schaltelement F mit dem Getriebegehäuse GG verbunden wird.

Jeweils zwei Schaltelemente sind durch eine doppeltwirkende Schalteinrichtung betätigbar. Zweites und viertes Schaltelement E, D sind über eine erste Schalteinrichtung betätigbar. Drittes und fünftes Schaltelement B, C sind über eine zweite Schalteinrichtung betätigbar. Erstes und sechstes Schaltelement A, F sind über eine dritte Schalteinrichtung betätigbar. Jeder der drei Schalteinrichtungen kann dabei drei Zustände einnehmen. In einem ersten Schaltzustand der Schalteinrichtung befindet sich das erste der Schalteinrichtung zugeordnete Schaltelement in einer Geschlossen-Stellung, während das zweite der Schalteinrichtung zugeordnete Schaltelement eine Offen-Stellung einnimmt. In einem zweiten Schaltzustand der Schalteinrichtung befindet sich das zweite der Schalteinrichtung zugeordnete Schaltelement in einer Geschlossen-Stellung, während das erste der Schalteinrichtung zugeordnete Schaltelement eine Offen-Stellung einnimmt. In einem dritten Schaltzustand nehmen beide der Schalteinrichtung zugeordneten Schaltelemente die Offen-Stellung ein. Durch die Ausgestaltung des Hauptradsatzes HRS und die Anbindung des Hauptradsatzes HRS an die elektrische Maschine EM wird diese Zuordnung der insgesamt sechs Schaltelemente A, B, C, D, E, F zu lediglich drei Schalteinrichtungen ermöglicht. Diese verringerte Anzahl der Schalteinrichtungen trägt zur Reduktion der Komplexität des Getriebes G bei.

Das Getriebe G weist eine elektrische Maschine EM auf, wobei ein Stator S drehfest mit dem Getriebegehäuse GG des Getriebes G oder mit einem anderen drehfesten Bauelement des Getriebes G verbunden ist, sodass der Stator S keine Drehzahl annehmen kann. Ein drehbar gelagerter Rotor R ist mit einem Sonnenrad So-P4 des Planetenradsatzes P4 des Zusatzradsatzes ZRS verbunden. Das Sonnenrad So-P4 des Planetenradsatzes P4 des Zusatzradsatzes ZRS ist dabei Bestandteil einer ersten Welle W1 P4 des Zusatzradsatzes ZRS. Ein Steg St-P4 des Planetenradsatzes P4 des Zusatzradsatzes ZRS ist Bestandteil einer zweiten Welle W2P4 des Zusatzradsatzes ZRS und ist mit der ersten Welle W1 des Hauptradsatzes HRS verbunden. Ein Hohlrad Ho-P4 des Planetenradsatzes P4 des Zusatzradsatzes ZRS ist Bestandteil einer dritten Welle W3P4 des Zusatzradsatzes ZRS und ist mit der dritten Welle W3 des Hauptradsatzes HRS verbunden.

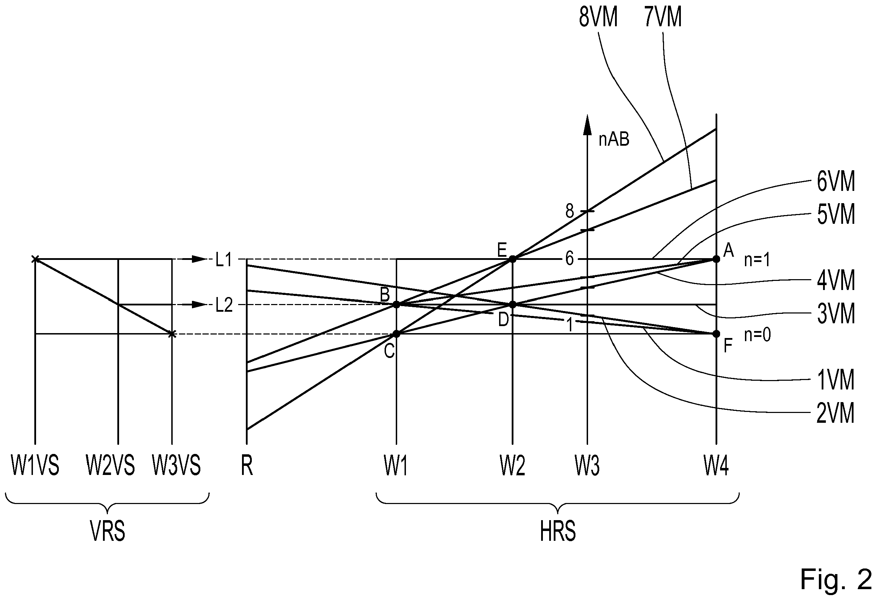

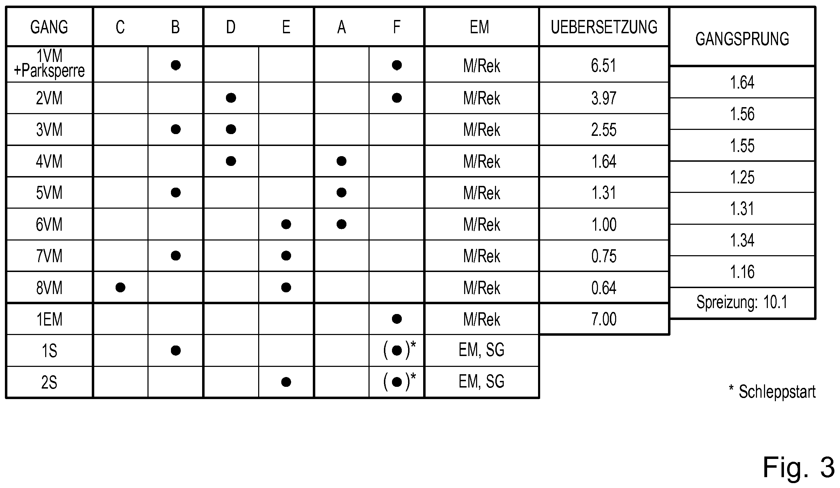

Fig. 2 zeigt einen Drehzahlplan des Getriebes G, während in Fig. 3 ein Schaltschema des Getriebes G dargestellt ist. In Fig. 2 sind in vertikaler Richtung die Drehzahlen der vier Wellen W1, W2, W3, W4 des Hauptradsatzes HRS und des Rotors R im Verhältnis zur Drehzahl der Getriebe-Eingangswelle GW1 aufgetragen. Die maximal auftretende Drehzahl der Getriebe-Eingangswelle GW1 ist auf den Wert Eins normiert. Die Abstände zwischen den vier Wellen W1, W2, W3, W4 des Hauptradsatzes HRS und dem Rotor R ergeben sich durch die Standgetriebeübersetzungen des ersten und zweiten Planetenradsätzen P1, P2 des Hauptradsatzes HRS und der Standgetriebeübersetzung des Planetenradsatzes P4 des Zusatzradsatzes ZRS. Zu einem bestimmten Betriebspunkt gehörende Drehzahlverhältnisse lassen sich durch eine Gerade verbinden.

Werden zwei Wellen miteinander verbunden, so drehen diese miteinander verbundenen Wellen mit derselben Drehzahl. Der Übersichtlichkeit halber können derart verbundene Wellen im Drehzahlplan horizontal getrennt voneinander dargestellt sein, beispielsweise um die Drehzahl-Übertragung vom Vorschaltradsatz VRS über den ersten oder zweiten Leistungspfad L1, L2 zum Hauptradsatz HRS besser zu verdeutlichen. Der dabei im Drehzahlplan gewählte horizontale Abstand zwischen den verbundenen Wellen ist willkürlich. Die Übersetzung zwischen derart verbundenen Wellen beträgt selbstverständlich den Wert Eins, unabhängig vom im Drehzahlplan gewählten horizontalen Abstand.

Werden von Hohlrad, Steg und Sonne eines Planetenradsatzes zwei dieser Elemente miteinander verbunden, so rotieren Hohlrad, Steg und Sonne dieses Planetenradsatzes mit derselben Drehzahl. In diesem Zustand nimmt die Übersetzung zwischen den genannten Elementen den Wert Eins an. Der Übersichtlichkeit halber wird die horizontale Anordnung der mit diesen Elementen verbundenen Wellen im Drehzahlplan nicht verschoben. Infolgedessen ist dieser Zustand im Drehzahlplan durch eine horizontale Gerade zu erkennen, die die beteiligten Wellen miteinander verbindet.

Fig. 3 zeigt ein Schaltschema des Getriebes G entsprechend der ersten Ausführungsform. Durch das Schaltschema in Fig. 3 und dem Drehzahlplan in Fig. 2 wird die Funktionsweise der zweiten Ausführungsform des Getriebes G deutlich. Die geschlossenen Schaltelemente A, B, C, D, E, F sind in Fig. 3 durch Kreise gekennzeichnet. Dem Schaltschema können die jeweiligen Übersetzungen der einzelnen Gangstufen und die daraus zu bestimmenden Gangsprünge zum nächst höheren Gang beispielhaft entnommen werden, wobei das Getriebe G derart eine Spreizung von 10,1 aufweist. Die Übersetzungen ergeben sich aus den Standgetriebeübersetzungen der Planetenradsätze P1, P2, P3, P4. Bei sequentieller Schaltweise können Doppelschaltungen bzw. Gruppenschaltungen vermieden werden, da zwei benachbarte Gangstufen ein Schaltelement gemeinsam benutzen. Die Gänge des Getriebes G sind in den verschiedenen Zeilen des Schaltschemas dargestellt. In einer Spalte des Schaltschemas ist des Weiteren angegeben, ob die elektrische Maschine EM in dem betreffenden Gang in der Lage ist, mechanische Leistung auf die Getriebe-Ausgangswelle GW2 abzugeben oder von dieser aufzunehmen.

Ein erster Vorwärtsgang 1VM zwischen der Getriebe-Eingangswelle GW1 und der Getriebe-Ausgangswelle GW2 ergibt sich durch Schließen des dritten Schaltelements B und des sechsten Schaltelements F, ein zweiter Vorwärtsgang 2VM durch Schließen des vierten Schaltelements D und des sechsten Schaltelements F, ein dritter Vorwärtsgang 3VM durch Schließen des dritten Schaltelements B und des vierten Schaltelements D, ein vierter Vorwärtsgang 4VM durch Schließen des vierten Schaltelements D und des ersten Schaltelements A, ein fünfter Vorwärtsgang 5VM durch Schließen des dritten Schaltelementes B und des ersten Schaltelements A, ein sechster Vorwärtsgang 6VM durch Schließen des zweiten Schaltelements E und des ersten Schaltelements A, ein siebenter Vorwärtsgang 7VM durch Schließen des dritten Schaltelements B und des zweiten Schaltelements E, und ein achter Vorwärtsgang 8VM durch Schließen des fünften Schaltelements C und des zweiten Schaltelements E.

In einem elektrischen Gang 1 EM wird Drehmoment allein von der elektrischen Maschine EM zur Getriebe-Ausgangswelle GW2 übertragen, wobei alle Schaltelemente bis auf das sechste Schaltelement F geöffnet sind, und somit keine drehmomentführende Verbindung zwischen der Getriebe-Eingangswelle GW1 und der GetriebeAusgangswelle GW2 besteht. Der elektrische Gang 1 EM dient auch als Rückwärtsgang, in dem die elektrische Maschine EM so angesteuert wird, dass der Rotor R eine negative Drehzahl, also eine Rückwärtsrotation annimmt. Auf einen separaten Rückwärtsgang kann somit verzichtet werden.

In einem ersten und zweiten Startmodus 1S, 2S wird der Getriebe-Eingangswelle GW1 Drehmoment zugeführt, wobei je nach Stellung des sechsten Schaltelements F Drehmoment ausschließlich von der elektrischen Maschine EM oder auch von der Getriebe-Ausgangswelle GW2 der Getriebe-Eingangswelle GW1 zuführbar ist. Ist das sechste Schaltelement F geschlossen, und gibt die elektrische Maschine EM kein Moment ab, so kann der Getriebe-Eingangswelle GW1 Drehmoment auch ausschließlich von der Getriebe-Ausgangswelle GW2 zugeführt werden. Dies ist insbesondere bei der Verwendung des Getriebes G im Kraftfahrzeug relevant, um derart eine an der Getriebe-Eingangswelle GW1 angebundene Verbrennungskraftmaschine VKM zu starten. Ist dabei das sechste Schaltelement F geöffnet, so muss die Getriebe-Ausgangswelle GW2 durch eine Feststellbremse drehfest festgesetzt sein.

Im Folgenden wird beispielhaft ein Lastschaltvorgang beschrieben. Im zweiten Vorwärtsgang bilden die zweite und die vierte Welle W2, W4 des Hauptradsatzes HRS je eine Differenzwelle, während die dritte Welle W3 des Hauptradsatzes HRS eine Summenwelle darstellt. Bei einem Schaltvorgang vom zweiten Vorwärtsgang 2VM in den dritten Vorwärtsgang 3VM bleibt das vierte Schaltelement D geschlossen. Das sechste Schaltelement F wird geöffnet, anschließend wird das dritte Schaltelement B geschlossen. Ist das sechste Schaltelement F als Klauen-Schaltelement ausgebildet, so muss das sechste Schaltelement F vor dem Öffnen weitgehend drehmomentfrei gestellt werden, sodass das sechste Schaltelement F kein oder nur mehr ein geringes Drehmoment überträgt. Diese Lastfreistellung des sechsten Schaltelements F wird durch ein generatorisches Moment der elektrische Maschinen EM bewirkt. Dabei bleibt zumindest ein Anteil des zuvor an der dritten Welle W3 des Hauptradsatzes HRS anliegenden Drehmoments erhalten, wodurch es an der Getriebe-Ausgangswelle GW2 zu keinem vollständigen Drehmomenteinbruch kommt. Ist das sechste Schaltelement F geöffnet, so wird die zweite Welle W2 des Hauptradsatzes HRS zur Summenwelle, während die erste Welle W1P4 des Zusatzradsatzes ZRS und die dritte Welle W3 des Hauptradsatzes HRS je eine Differenzwelle bilden. Durch die elektrische Maschine EM wird nun ein generatorisches Drehmoment aufgebracht, um eine Drehzahlsynchronisation zwischen der zweiten Welle W2VS des Vorschaltradsatzes VRS und der ersten Welle W1 des Hauptradsatzes HRS zu erreichen. Dadurch wird ein Schließen des dritten Schaltelements B ermöglicht, wobei zumindest ein Anteil des zuvor an der dritten Welle W3 des Hauptradsatzes HRS anliegenden Drehmoments erhalten bleibt. Ist das dritte Schaltelement B geschlossen, so wird die erste Welle W1 des Hauptradsatzes HRS zur Differenzwelle, der Schaltvorgang ist damit abgeschlossen. Dadurch wird erreicht, dass während des Schaltvorgangs ein Teil des Leistungsflusses von Getriebe-Eingangswelle GW1 zur Getriebe-Ausgangswelle GW2 aufrechterhalten werden kann. Diese Wirkungsweise gilt für alle Ausführungsformen.

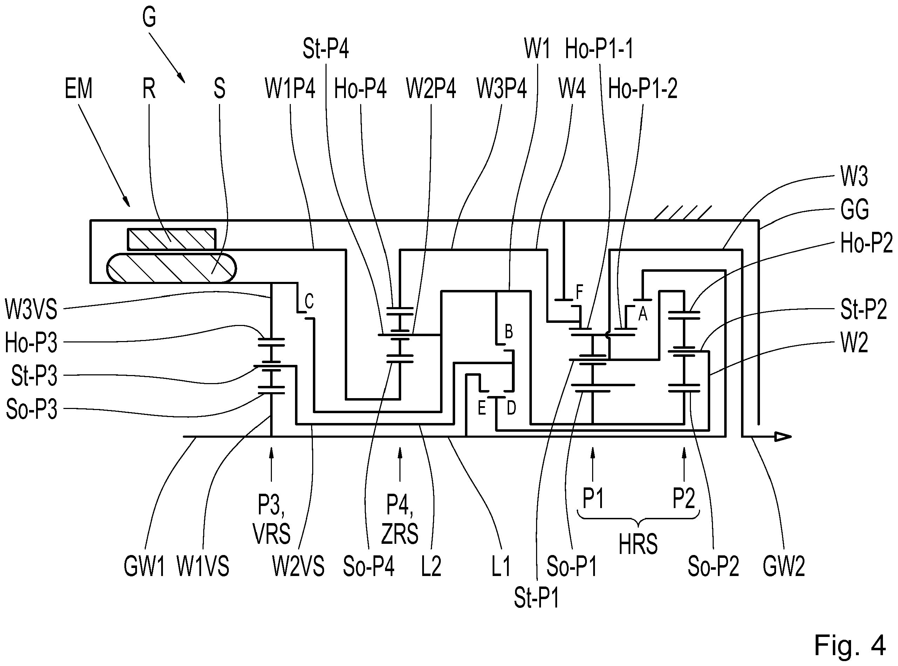

Fig. 4 zeigt schematisch ein Getriebe G entsprechend einer zweiten Ausführungsform der Erfindung. Im Gegensatz zur ersten Ausführungsform ist die dritte Welle W3P4 des Zusatzradsatzes ZRS nun nicht mehr mit der dritten Welle W3 des Hauptradsatzes HRS verbunden. Stattdessen ist die dritte Welle W3P4 des Zusatzradsatzes ZRS mit der vierten Welle W4 des Hauptradsatzes HRS verbunden. Dabei ist die dritte Welle W3P4 des Zusatzradsatzes ZRS mit jenem Abschnitt der vierten Welle W4 des Hauptradsatzes HRS verbunden, der mit dem ersten Segment Ho-P1-1 des Hohlrads Ho-P1 des ersten Planetenradsatzes P1 des Hauptradsatzes HRS verbunden ist. Um die gleiche Übersetzungswirkung zwischen Rotor R und den vier Wellen W1, W2, W3, W4 des Hauptradsatzes HRS zu erzielen wie in der ersten Ausführungsform des Getriebes G muss die Standgetriebeübersetzung des Planetenradsatzes P4 des Zusatzradsatzes ZRS entsprechend angepasst werden.

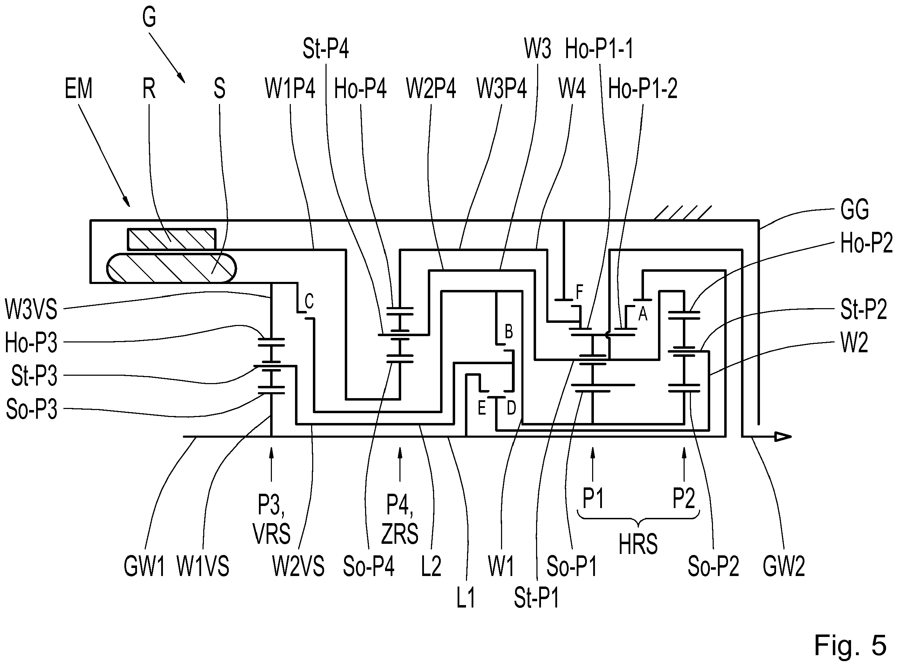

Fig. 5 zeigt schematisch ein Getriebe G entsprechend einer dritten Ausführungsform der Erfindung. Im Gegensatz zur zweiten Ausführungsform ist die zweite Welle W2P4 des Zusatzradsatzes ZRS nun nicht mehr mit der ersten Welle W1 des Hauptradsatzes HRS verbunden. Stattdessen ist die zweite Welle W2P4 des Zusatzradsatzes ZRS mit der dritten Welle W3 des Hauptradsatzes HRS verbunden. Die dritte Welle W3P4 des Zusatzradsatzes ZRS ist wie in der zweiten Ausführungsform mit der vierten Welle W4 des Hauptradsatzes HRS verbunden. In der dritten Ausführungsform liegt die erste Welle W1 des Hauptradsatzes HRS im Drehzahlplan nur dann zwischen der ersten Welle W1 P4 des Zusatzradsatzes ZRS und der zweiten Welle W2 des Hauptradsatzes HRS, wenn die Standgetriebeübersetzungen des Planetenradsatzes P4 des Zusatzradsatzes ZRS und der beiden Planetenradsätze P1, P2 des Hauptradsatzes HRS entsprechend gewählt sind.

Der Drehzahlplan in Fig. 2 und das Schaltschema in Fig. 4 gelten auch für die zweite und dritte Ausführungsform.

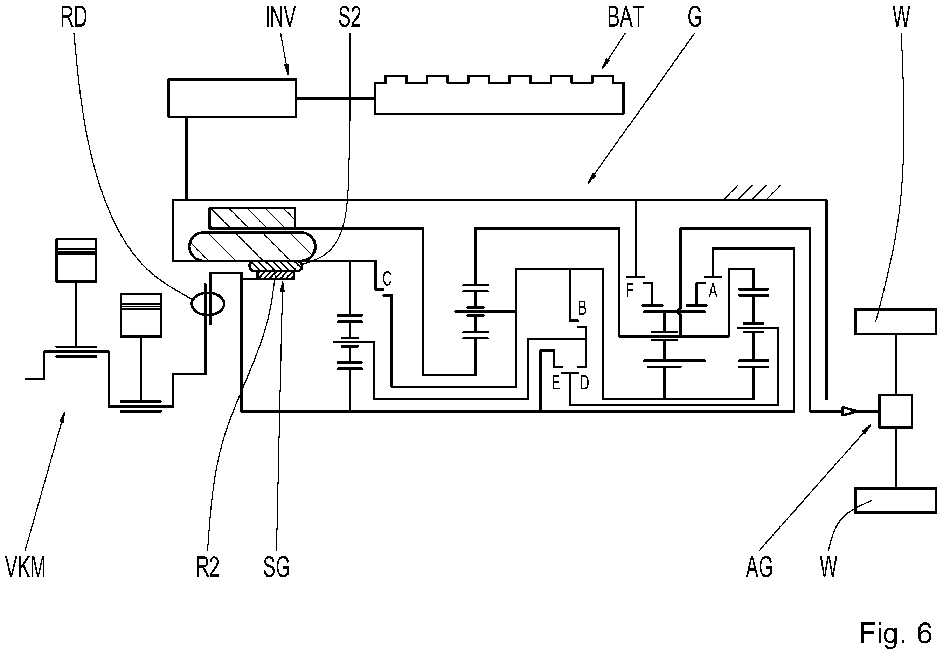

Fig. 6 zeigt schematisch einen Hybridantriebsstrang eines Kraftfahrzeugs. Das darin enthaltene Getriebe G entspricht der ersten Ausführungsform des Getriebes G, wobei dies lediglich beispielhaft anzusehen ist. Ein drehbarer Rotor R2 einer Zusatz-Elektromaschine SG ist mit der Getriebe-Eingangswelle GW1 verbunden, während der Stator S2 der Zusatz-Elektromaschine SG drehfest am Getriebegehäuse GG des Getriebes G oder an einem anderen drehfesten Bauelement des Getriebes G angebunden ist. Über einen Rotationsschwingungsdämpfer RD ist eine Verbrennungskraftmaschine VKM mit der Getriebe-Eingangswelle GW1 verbunden. Die Getriebe-Ausgangswelle GW2 ist mit einem Achsgetriebe AG verbunden. Vom Achsgetriebe AG ausgehend wird das Drehmoment, das an der Getriebe-Ausgangswelle GW2 anliegt, auf Räder W des Kraftfahrzeugs verteilt. Im motorischen Betrieb der elektrischen Maschine EM wird dem Stator S über einen Wechselrichter INV elektrischer Leistung zugeführt. Im generatorischen Betrieb der elektrischen Maschine EM führt der Stator S dem Wechselrichter INV elektrische Leistung zu. Der Wechselrichter INV wandelt dabei die Gleichspannung einer Batterie BAT in eine für die elektrische Maschine EM geeignete Wechselspannung, und umgekehrt. Die Zusatz-Elektromaschine SG kann dabei ebenso über den Wechselrichter INV mit elektrischer Leistung versorgt werden. Alternativ dazu kann die Zusatz-Elektromaschine SG auch an eine andere Leistungsversorgung angeschlossen sein, beispielsweise an ein Niederspannungs-Bordnetz des Kraftfahrzeugs.

### Bezugszeichen

- G: Getriebe
- GW1: Getriebe-Eingangswelle
- GW2: Getriebe-Ausgangswelle
- HRS: Hauptradsatz
- ZRS: Zusatzradsatz
- VRS: Vorschaltradsatz
- EM: Elektrische Maschine
- R: Rotor der elektrischen Maschine
- S: Stator der elektrischen Maschine
- SG: Zusatz-Elektromaschine
- R2: Rotor der Zusatz-Elektromaschine
- S2: Stator der Zusatz-Elektromaschine
- RD: Rotationsschwingungsdämpfer
- VKM: Verbrennungskraftmaschine
- INV: Wechselrichter
- BAT: Batterie
- P1: Erster Planetenradsatz des Hauptradsatzes
- P2: Zweiter Planetenradsatz des Hauptradsatzes
- P3: Planetenradsatz des Vorschaltradsatzes
- P4: Planetenradsatz des Zusatzradsatzes
- W1: Erste Welle des Hauptradsatzes
- W2: Zweite Welle des Hauptradsatzes
- W3: Dritte Welle des Hauptradsatzes
- W4: Vierte Welle des Hauptradsatzes
- W1VS: Erste Welle des Vorschaltradsatzes
- W2VS: Zweite Welle des Vorschaltradsatzes
- W3VS: Dritte Welle des Vorschaltradsatzes
- W1P4: Erste Welle des Zusatzradsatzes
- W2P4: Zweite Welle des Zusatzradsatzes
- W3P4: Dritte Welle des Zusatzradsatzes
- A: Erstes Schaltelement
- E: Zweites Schaltelement
- B: Drittes Schaltelement
- D: Viertes Schaltelement
- C: Fünftes Schaltelement
- F: Sechstes Schaltelement
- So-P1: Sonnenrad des ersten Planetenradsatzes des Hauptradsatzes
- St-P1: Steg des ersten Planetenradsatzes des Hauptradsatzes
- Ho-P1: Hohlrad des ersten Planetenradsatzes des Hauptradsatzes
- Ho-P1-1: Erstes Segment
- Ho-P1-2: Zweites Segment
- So-P2: Sonnenrad des zweiten Planetenradsatzes des Hauptradsatzes
- St-P2: Steg des zweiten Planetenradsatzes des Hauptradsatzes
- Ho-P2: Hohlrad des zweiten Planetenradsatzes des Hauptradsatzes
- So-P3: Sonnenrad des Planetenradsatzes des Vorschaltradsatzes
- St-P3: Steg des Planetenradsatzes des Vorschaltradsatzes
- Ho-P3: Hohlrad des Planetenradsatzes des Vorschaltradsatzes
- So-P4: Sonnenrad des Planetenradsatzes des Zusatzradsatzes
- St-P4: Steg des Planetenradsatzes des Zusatzradsatzes
- Ho-P4: Hohlrad des Planetenradsatzes des Zusatzradsatzes
- L1: Erster Leistungspfad
- L2: Zweiter Leistungspfad
- 1VM-8VM: Erster bis achter Vorwärtsgang
- 1EM: Elektrischer Gang
- 1S: Erster Startmodus
- 2S: Zweiter Startmodus
- AG: Achsgetriebe
- W: Rad

## Patentansprüche

1. Getriebe (G) mit einer Getriebe-Eingangswelle (GW1) und einer Getriebe-Ausgangswelle (GW2), einem Hauptradsatz (HRS), einem Zusatzradsatz (ZRS), und einer elektrischen Maschine (EM) mit einem Rotor (R) und einem Stator (S), wobei das Getriebe (G) einen ersten Leistungspfad (L1) und einen zweiten Leistungspfad (L2) zwischen der Getriebe-Eingangswelle (GW1) und dem Hauptradsatz (HRS) aufweist, wobei der Hauptradsatz (HRS) einen ersten und einen zweiten Planetenradsatz (P1, P2) mit insgesamt vier in Drehzahlordnung als erste, zweite, dritte und vierte Welle bezeichnete Wellen (W1, W2, W3, W4) aufweist, wobei der erste Leistungspfad (L1) über ein erstes Schaltelement (A) mit der vierten Welle (W4) des Hauptradsatzes (HRS) und über ein zweites Schaltelement (E) mit der zweiten Welle (W2) des Hauptradsatzes (HRS) verbindbar ist, wobei der zweite Leistungspfad (L2) über ein drittes Schaltelement (B) mit der ersten Welle (W1) des Hauptradsatzes (HRS) und über ein viertes Schaltelement (D) mit der zweiten Welle (W2) des Hauptradsatzes (HRS) verbindbar ist, wobei die dritte Welle (W3) des Hauptradsatzes (HRS) mit der Getriebe-Ausgangswelle (GW2) verbunden ist, wobei der Zusatzradsatz (ZRS) einen Planetenradsatz (P4) mit einer ersten, zweiten und dritten Welle (W1P4, W2P4, W3P4) aufweist, und wobei die erste Welle (W1P4) des Zusatzradsatzes (ZRS) mit dem Rotor (R) ständig verbunden ist, wobei die zweite Welle (W2P4) des Zusatzradsatzes (ZRS) mit der ersten oder dritten Welle (W1, W3) des Hauptradsatzes (HRS) ständig verbunden ist, **dadurch gekennzeichnet, dass**
- im Falle, dass die zweite Welle (W2P4) des Zusatzradsatzes (ZRS) mit der ersten Welle (W1) des Hauptradsatzes (HRS) verbunden ist, die dritte Welle (W3P4) des Zusatzradsatzes (ZRS) mit der dritten oder vierten Welle (W3, W4) des Hauptradsatzes (HRS) ständig verbunden ist, und
- im Falle, dass die zweite Welle (W2P4) des Zusatzradsatzes (ZRS) mit der dritten Welle (W3) des Hauptradsatzes (HRS) verbunden ist, die dritte Welle (W3P4) des Zusatzradsatzes (ZRS) mit der vierten Welle (W4) des Hauptradsatzes (HRS) ständig verbunden ist.

2. Getriebe (G) nach Anspruch 1, **dadurch gekennzeichnet, dass**, wenn die zweite Welle (W2P4) des Zusatzradsatzes (ZRS) mit der dritten Welle (W3) des Hauptradsatzes (HRS) verbunden ist, die Standgetriebeübersetzung des Planetenradsatzes (P4) des Zusatzradsatzes (ZRS) so gewählt ist, dass die erste Welle (W1) des Hauptradsatzes (HRS) im Drehzahlplan zwischen der ersten Welle (W1P4) des Zusatzradsatzes (ZRS) und der zweiten Welle (W2) des Hauptradsatzes (HRS) liegt.

3. Getriebe (G) nach Anspruch 1 oder Anspruch 2, **dadurch gekennzeichnet, dass** ein Sonnenrad (So-P4) des Planetenradsatzes (P4) des Zusatzradsatzes (ZRS) ein Bestandteil der ersten Welle (W1P4) des Zusatzradsatzes (ZRS) ist, und
- im Falle, dass der Planetenradsatz (P4) des Zusatzradsatzes (ZRS) als Minus-Radsatz ausgebildet ist, ein Steg (St-P4) des Planetenradsatzes (P4) des Zusatzradsatzes (ZRS) ein Bestandteil der zweiten Welle (W2P4) des Zusatzradsatzes (ZRS) ist und ein Hohlrad (Ho-P4) des Planetenradsatzes (P4) des Zusatzradsatzes (ZRS) ein Bestandteil der dritten Welle (W3P4) des Zusatzradsatzes (ZRS) ist, und
- im Falle, dass der Planetenradsatz (P4) des Zusatzradsatzes (ZRS) als Plus-Radsatz ausgebildet ist, das Hohlrad (Ho-P4) des Planetenradsatzes (P4) des Zusatzradsatzes (ZRS) ein Bestandteil der zweiten Welle (W2P4) des Zusatzradsatzes (ZRS) ist und der Steg (St-P4) des Planetenradsatzes (P4) des Zusatzradsatzes (ZRS) ein Bestandteil der dritten Welle (W3P4) des Zusatzradsatzes (ZRS) ist.

4. Getriebe (G) nach einem der vorhergehenden Ansprüche, **dadurch gekennzeichnet, dass** die erste Welle (W1) des Hauptradsatzes (HRS) durch ein fünftes Schaltelement (C) drehfest festsetzbar ist, und dass die vierte Welle (W4) des Hauptradsatzes (HRS) durch ein sechstes Schaltelement (F) drehfest festsetzbar ist.

5. Getriebe (G) nach einem der vorhergehenden Ansprüche, **dadurch gekennzeichnet, dass** erster und zweiter Planetenradsatz (P1, P2) des Hauptradsatzes (HRS) als Minus-Radsätze ausgebildet sind, wobei die erste Welle (W1) des Hauptradsatzes (HRS) mit einem Sonnenrad (So-P1) des ersten Planetenradsatzes (P1) des Hauptradsatzes (HRS) und mit einem Sonnenrad (So-P2) des zweiten Planetenradsatzes (P2) des Hauptradsatzes (HRS) verbunden ist, wobei die zweite Welle (W2) des Hauptradsatzes (HRS) mit einem Steg (St-P2) des zweiten Planetenradsatzes (P2) des Hauptradsatzes (HRS) verbunden ist, wobei die dritte Welle (W3) des Hauptradsatzes (HRS) mit einem Steg (St-P1) des ersten Planetenradsatzes (P1) des Hauptradsatzes (HRS) und mit einem Hohlrad (Ho-P2) des zweiten Planetenradsatzes (P2) des Hauptradsatzes (HRS) verbunden ist, und wobei die vierte Welle (W4) des Hauptradsatzes (HRS) mit einem Hohlrad (Ho-P1) des ersten Planetenradsatzes (P1) des Hauptradsatzes (HRS) verbunden ist.

6. Getriebe (G) nach Anspruch 5, **dadurch gekennzeichnet, dass** das Hohlrad (Ho-P1) des ersten Planetenradsatzes (P1) des Hauptradsatzes (HRS) aus einem ersten und einem zweiten Segment (Ho-P1-1, Ho-P1-2) besteht.

7. Getriebe (G) nach Anspruch 6, **dadurch gekennzeichnet, dass** zwischen erstem und zweitem Segment (Ho-P1 -1, Ho-P1-2) ein Abschnitt der dritten Welle (W3) des Hauptradsatzes (HRS) angeordnet ist, wodurch ein Abschnitt der dritten Welle (W3) des Hauptradsatzes (HRS) zwischen erstem und zweitem Segment (Ho-P1-1, Ho-P1-2) radial nach außen führbar ist.

8. Getriebe (G) nach einem der Ansprüche 4 bis 7, **dadurch gekennzeichnet, dass** das erste, zweite, dritte, vierte, fünfte und sechste Schaltelement (A, B, C, D, E, F) als Klauen-Schaltelemente ausgebildet sind.

9. Getriebe (G) einem der Ansprüche 4 bis 8, **dadurch gekennzeichnet, dass** durch selektives paarweises Eingreifen der sechs Schaltelemente (A, B, C, D, E, F) acht Vorwärtsgänge (1VM-8VM) realisierbar sind, wobei sich der erste Vorwärtsgang (1VM) durch Schließen des dritten Schaltelements (B) und des sechsten Schaltelements (F), der zweite Vorwärtsgang (2VM) durch Schließen des vierten Schaltelements (D) und des sechsten Schaltelements (F), der dritte Vorwärtsgang (3VM) durch Schließen des dritten Schaltelements (B) und des vierten Schaltelements (D), der vierte Vorwärtsgang (4VM) durch Schließen des vierten Schaltelements (D) und des ersten Schaltelements (A), der fünfte Vorwärtsgang (5VM) durch Schließen des dritten Schaltelementes (B) und des ersten Schaltelements (A), der sechste Vorwärtsgang (6VM) durch Schließen des zweiten Schaltelements (E) und des ersten Schaltelements (A), der siebente Vorwärtsgang (7VM) durch Schließen des dritten Schaltelements (B) und des zweiten Schaltelements (E), und der achte Vorwärtsgang (8VM) sich durch Schließen des fünften Schaltelements (C) und des zweiten Schaltelements (E) ergibt.

10. Getriebe (G) nach einem der Ansprüche 1 bis 3, **dadurch gekennzeichnet, dass** der Planetenradsatz (P4) des Zusatzradsatzes (ZRS) und der erste und zweite Planetenradsatz (P1, P2) des Hauptradsatzes (HRS) als Minus-Radsätze ausgebildet sind, wobei das Sonnenrad (So-P4) des Planetenradsatzes (P4) des Zusatzradsatzes (ZRS) Bestandteil der ersten Welle (W1P4) des Zusatzradsatzes (ZRS) ist und mit dem Rotor (R) verbunden ist, wobei der Steg (St-P4) des Planetenradsatzes (P4) des Zusatzradsatzes (ZRS) mit dem Sonnenrad (So-P1) des ersten Planetenradsatzes (P1) des Hauptradsatzes (HRS) und mit dem Sonnenrad (So-P2) des zweiten Planetenradsatzes (P2) des Hauptradsatzes (HRS) verbunden ist und derart Bestandteil der zweiten Welle (W2P4) des Zusatzradsatzes (ZRS) und der ersten Welle (W1) des Hauptradsatzes (HRS) ist, wobei das Hohlrad (Ho-P4) des Planetenradsatzes (P4) des Zusatzradsatzes (ZRS) mit dem Steg (St-P1) des ersten Planetenradsatzes (P1) des Hauptradsatzes (HRS) und mit dem Hohlrad (Ho-P2) des zweiten Planetenradsatzes (P2) des Hauptradsatzes (HRS) verbunden ist und derart Bestandteil der dritten Welle (W3P4) des Zusatzradsatzes (ZRS), der dritten Welle (W3) des Hauptradsatzes (HRS) und der Getriebe-Ausgangswelle (GW2) ist, wobei das Hohlrad (Ho-P1) des ersten Planetenradsatzes (P1) des Hauptradsatzes (HRS) Bestandteil der vierten Welle (W4) des Hauptradsatzes (HRS) ist, und wobei der Steg (St-P2) des zweiten Planetenradsatzes (P2) des Hauptradsatzes (HRS) Bestandteil der zweiten Welle (W2) des Hauptradsatzes (HRS) ist.

11. Getriebe (G) nach einem der Ansprüche 1 bis 3, **dadurch gekennzeichnet, dass** der Planetenradsatz (P4) des Zusatzradsatzes (ZRS) und der erste und zweite Planetenradsatz (P1, P2) des Hauptradsatzes (HRS) als Minus-Radsätze ausgebildet sind, wobei das Sonnenrad (So-P4) des Planetenradsatzes (P4) des Zusatzradsatzes (ZRS) Bestandteil der ersten Welle (W1P4) des Zusatzradsatzes (ZRS) ist und mit dem Rotor (R) verbunden ist, wobei der Steg (St-P4) des Planetenradsatzes (P4) des Zusatzradsatzes (ZRS) mit dem Sonnenrad (So-P1) des ersten Planetenradsatzes (P1) des Hauptradsatzes (HRS) und mit dem Sonnenrad (So-P2) des zweiten Planetenradsatzes (P2) des Hauptradsatzes (HRS) verbunden ist und derart Bestandteil der zweiten Welle (W2P4) des Zusatzradsatzes (ZRS) und der ersten Welle (W1) des Hauptradsatzes (HRS) ist, wobei das Hohlrad (Ho-P4) des Planetenradsatzes (P4) des Zusatzradsatzes (ZRS) mit dem Hohlrad (Ho-P1) des ersten Planetenradsatzes (P1) des Hauptradsatzes (HRS) verbunden ist und derart Bestandteil der dritten Welle (W3P4) des Zusatzradsatzes (ZRS) und der vierten Welle (W4) des Hauptradsatzes (HRS) ist, wobei der Steg (St-P2) des zweiten Planetenradsatzes (P2) des Hauptradsatzes (HRS) Bestandteil der zweiten Welle (W2) des Hauptradsatzes (HRS) ist, und wobei der Steg (St-P1) des ersten Planetenradsatzes (P1) des Hauptradsatzes (HRS) mit dem Hohlrad (Ho-P2) des zweiten Planetenradsatzes (P2) des Hauptradsatzes (HRS) verbunden ist und derart Bestandteil der dritten Welle (W3) des Hauptradsatzes (HRS) und der Getriebe-Ausgangswelle (GW2) ist.

12. Getriebe (G) nach einem der Ansprüche 1 bis 3, **dadurch gekennzeichnet, dass** der Planetenradsatz (P4) des Zusatzradsatzes (ZRS) und der erste und zweite Planetenradsatz (P1, P2) des Hauptradsatzes (HRS) als Minus-Radsätze ausgebildet sind, wobei das Sonnenrad (So-P4) des Planetenradsatzes (P4) des Zusatzradsatzes (ZRS) Bestandteil der ersten Welle (W1P4) des Zusatzradsatzes (ZRS) ist und mit dem Rotor (R) verbunden ist, wobei der Steg (St-P4) des Planetenradsatzes (P4) des Zusatzradsatzes (ZRS) mit dem Steg (St-P1) des ersten Planetenradsatzes (P1) des Hauptradsatzes (HRS) und mit dem Hohlrad (Ho-P2) des zweiten Planetenradsatzes (P2) des Hauptradsatzes (HRS) verbunden ist und derart Bestandteil der zweiten Welle (W2P4) des Zusatzradsatzes (ZRS), der dritten Welle (W3) des Hauptradsatzes (HRS) und der Getriebe-Ausgangswelle (GW2) ist, wobei das Hohlrad (Ho-P4) des Planetenradsatzes (P4) des Zusatzradsatzes (ZRS) mit dem Hohlrad (Ho-P1) des ersten Planetenradsatzes (P1) des Hauptradsatzes (HRS) verbunden ist und derart Bestandteil der dritten Welle (W3P4) des Zusatzradsatzes (ZRS) und der vierten Welle (W4) des Hauptradsatzes (HRS) ist, wobei das Sonnenrad (So-P1) des ersten Planetenradsatzes (P1) des Hauptradsatzes (HRS) mit dem Sonnenrad (So-P2) des zweiten Planetenradsatzes (P2) des Hauptradsatzes (HRS) verbunden ist und derart Bestandteil der ersten Welle (W1) des Hauptradsatzes (HRS) ist, und wobei der Steg (St-P2) des zweiten Planetenradsatzes (P2) des Hauptradsatzes (HRS) Bestandteil der zweiten Welle (W2) des Hauptradsatzes (HRS) ist.

13. Getriebe (G) nach Anspruch 12, **dadurch gekennzeichnet, dass** die Standgetriebeübersetzungen des Planetenradsatzes (P4) des Zusatzradsatzes (ZRS) und des ersten und zweiten Planetenradsatzes (P1, P2) des Hauptradsatzes (HRS) so gewählt sind, dass die erste Welle (W1) des Hauptradsatzes (HRS) im Drehzahlplan zwischen der ersten Welle (W1P4) des Zusatzradsatzes (ZRS) und der zweiten Welle (W2) des Hauptradsatzes (HRS) liegt.

14. Hybridantriebsstrang für ein Kraftfahrzeug, wobei der Hybridantriebsstrang zumindest eine Verbrennungskraftmaschine (VKM) aufweist, **dadurch gekennzeichnet, dass** der Hybridantriebsstrang ein Getriebe (G) nach einem der Ansprüche 1 bis 13 aufweist.

15. Hybridantriebsstrang nach Anspruch 14, **dadurch gekennzeichnet, dass** der Hybridantriebsstrang zumindest eine mit der Verbrennungskraftmaschine (VKM) direkt oder über ein Getriebe verbundene Zusatz-Elektromaschine (SG) aufweist, die dazu eingerichtet ist die Verbrennungskraftmaschine (VKM) zu starten, wobei ein Rotor (R2) der Zusatz-Elektromaschine (SG) mit der Getriebe-Eingangswelle (GW1) des Getriebes (G) verbunden ist.

16. Antriebsstrang für ein Elektrofahrzeug, **dadurch gekennzeichnet, dass** der Antriebsstrang ein Getriebe (G) nach einem der Ansprüche 1 bis 13 aufweist.

## Claims

1. Gearbox (G) having a gearbox input shaft (GW1) and having a gearbox output shaft (GW2), having a main gear set (HRS), having an auxiliary gear set (ZRS), and having an electric machine (EM) with a rotor (R) and with a stator (S), wherein the gearbox (G) has a first power path (L1) and a second power path (L2) between the gearbox input shaft (GW1) and the main gear set (HRS), wherein the main gear set (HRS) has a first and a second planetary gear set (P1, P2) with a total of four shafts (W1, W2, W3, W4) denoted in rotational speed order as first, second, third and fourth shafts, wherein the first power path (L1) is connectable by means of a first shift element (A) to the fourth shaft (W4) of the main gear set (HRS) and by means of a second shift element (E) to the second shaft (W2) of the main gear set (HRS), wherein the second power path (L2) is connectable by means of a third shift element (B) to the first shaft (W1) of the main gear set (HRS) and by means of a fourth shift element (D) to the second shaft (W2) of the main gear set (HRS), wherein the third shaft (W3) of the main gear set (HRS) is connected to the gearbox output shaft (GW2), wherein the auxiliary gear set (ZRS) has a planetary gear set (P4) with a first, second and third shaft (W1P4, W2P4, W3P4), and wherein the first shaft (W1P4) of the auxiliary gear set (ZRS) is permanently connected to the rotor (R), wherein the second shaft (W2P4) of the auxiliary gear set (ZRS) is permanently connected to the first or third shaft (W1, W3) of the main gear set (HRS), **characterized in that**,
- in the case that the second shaft (W2P4) of the auxiliary gear set (ZRS) is connected to the first shaft (W1) of the main gear set (HRS), the third shaft (W3P4) of the auxiliary gear set (ZRS) is permanently connected to the third or fourth shaft (W3, W4) of the main gear set (HRS), and
- in the case that the second shaft (W2P4) of the auxiliary gear set (ZRS) is connected to the third shaft (W3) of the main gear set (HRS), the third shaft (W3P4) of the auxiliary gear set (ZRS) is permanently connected to the fourth shaft (W4) of the main gear set (HRS).

2. Gearbox (G) according to Claim 1, **characterized in that**, if the second shaft (W2P4) of the auxiliary gear set (ZRS) is connected to the third shaft (W3) of the main gear set (HRS), the fixed carrier transmission ratio of the planetary gear set (P4) of the auxiliary gear set (ZRS) is selected such that the first shaft (W1) of the main gear set (HRS) lies between the first shaft (W1P4) of the auxiliary gear set (ZRS) and the second shaft (W2) of the main gear set (HRS) in the rotational speed plan.

3. Gearbox (G) according to Claim 1 or Claim 2, **characterized in that** a sun gear (So-P4) of the planetary gear set (P4) of the auxiliary gear set (ZRS) is a constituent part of the first shaft (W1P4) of the auxiliary gear set (ZRS), and
- in the case that the planetary gear set (P4) of the auxiliary gear set (ZRS) is formed as a minus gear set, a carrier (St-P4) of the planetary gear set (P4) of the auxiliary gear set (ZRS) is a constituent part of the second shaft (W2P4) of the auxiliary gear set (ZRS) and an internal gear (HoP4) of the planetary gear set (P4) of the auxiliary gear set (ZRS) is a constituent part of the third shaft (W3P4) of the auxiliary gear set (ZRS), and
- in the case that the planetary gear set (P4) of the auxiliary gear set (ZRS) is formed as a plus gear set, the internal gear (Ho-P4) of the planetary gear set (P4) of the auxiliary gear set (ZRS) is a constituent part of the second shaft (W2P4) of the auxiliary gear set (ZRS) and the carrier (St-P4) of the planetary gear set (P4) of the auxiliary gear set (ZRS)is a constituent part of the third shaft (W3P4) of the auxiliary gear set (ZRS).

4. Gearbox (G) according to one of the preceding claims, **characterized in that** the first shaft (W1) of the main gear set (HRS) is rotationally fixedly immobilizable by means of a fifth shift element (C), and **in that** the fourth shaft (W4) of the main gear set (HRS) is rotationally fixedly immobilizable by means of a sixth shift element (F).

5. Gearbox (G) according to one of the preceding claims, **characterized in that** the first and second planetary gear sets (P1, P2) of the main gear set (HRS) are formed as minus gear sets, wherein the first shaft (W1) of the main gear set (HRS) is connected to a sun gear (So-P1) of the first planetary gear set (P1) of the main gear set (HRS) and to a sun gear (So-P2) of the second planetary gear set (P2) of the main gear set (HRS), wherein the second shaft (W2) of the main gear set (HRS) is connected to a carrier (St-P2) of the second planetary gear set (P2) of the main gear set (HRS), wherein the third shaft (W3) of the main gear set (HRS) is connected to a carrier (St-P1) of the first planetary gear set (P1) of the main gear set (HRS) and to an internal gear (Ho-P2) of the second planetary gear set (P2) of the main gear set (HRS), and wherein the fourth shaft (W4) of the main gear set (HRS) is connected to an internal gear (Ho-P1) of the first planetary gear set (P1) of the main gear set (HRS) .

6. Gearbox (G) according to Claim 5, **characterized in that** the internal gear (Ho-P1) of the first planetary gear set (P1) of the main gear set (HRS) is composed of a first and a second segment (Ho-P1-1, Ho-P1-2).

7. Gearbox (G) according to Claim 6, **characterized in that** a section of the third shaft (W3) of the main gear set (HRS) is arranged between the first and second segments (Ho-P1-1, Ho-P1-2), whereby a section of the third shaft (W3) of the main gear set (HRS) can be led radially to the outside between the first and second segments (Ho-P1-1, Ho-P1-2).

8. Gearbox (G) according to one of Claims 4 to 7, **characterized in that** the first, second, third, fourth, fifth and sixth shift elements (A, B, C, D, E, F) are formed as dog-clutch shift elements.

9. Gearbox (G) according to one of Claims 4 to 8, **characterized in that** eight forward gear ratios (1VM-8VM) can be realized through selective pairwise engagement of the six shift elements (A, B, C, D, E, F), wherein the first forward gear ratio (1VM) is formed by closing the third shift element (B) and the sixth shift element (F), the second forward gear ratio (2VM) is formed by closing the fourth shift element (D) and the sixth shift element (F), the third forward gear ratio (3VM) is formed by closing the third shift element (B) and the fourth shift element (D), the fourth forward gear ratio (4VM) is formed by closing the fourth shift element (D) and the first shift element (A), the fifth forward gear ratio (5VM) is formed by closing the third shift element (B) and the first shift element (A), the sixth forward gear ratio (6VM) is formed by closing the second shift element (E) and the first shift element (A), the seventh forward gear ratio (7VM) is formed by closing the third shift element (B) and the second shift element (E), and the eighth forward gear ratio (8VM) is formed by closing the fifth shift element (C) and the second shift element (E).

10. Gearbox (G) according to one of Claims 1 to 3, **characterized in that** the planetary gear set (P4) of the auxiliary gear set (ZRS) and the first and second planetary gear sets (P1, P2) of the main gear set (HRS) are formed as minus gear sets, wherein the sun gear (So-P4) of the planetary gear set (P4) of the auxiliary gear set (ZRS) is a constituent part of the first shaft (W1P4) of the auxiliary gear set (ZRS) and is connected to the rotor (R), wherein the carrier (St-P4) of the planetary gear set (P4) of the auxiliary gear set (ZRS) is connected to the sun gear (So-P1) of the first planetary gear set (P1) of the main gear set (HRS) and to the sun gear (So-P2) of the second planetary gear set (P2) of the main gear set (HRS) and is thus a constituent part of the second shaft (W2P4) of the auxiliary gear set (ZRS) and of the first shaft (W1) of the main gear set (HRS), wherein the internal gear (HoP4) of the planetary gear set (P4) of the auxiliary gear set (ZRS) is connected to the carrier (St-P1) of the first planetary gear set (P1) of the main gear set (HRS) and to the internal gear (Ho-P2) of the second planetary gear set (P2) of the main gear set (HRS) and is thus a constituent part of the third shaft (W3P4) of the auxiliary gear set (ZRS), of the third shaft (W3) of the main gear set (HRS) and of the gearbox output shaft (GW2), wherein the internal gear (Ho-P1) of the first planetary gear set (P1) of the main gear set (HRS) is a constituent part of the fourth shaft (W4) of the main gear set (HRS), and wherein the carrier (St-P2) of the second planetary gear set (P2) of the main gear set (HRS) is a constituent part of the second shaft (W2) of the main gear set (HRS).

11. Gearbox (G) according to one of Claims 1 to 3, **characterized in that** the planetary gear set (P4) of the auxiliary gear set (ZRS) and the first and second planetary gear sets (P1, P2) of the main gear set (HRS) are formed as minus gear sets, wherein the sun gear (So-P4) of the planetary gear set (P4) of the auxiliary gear set (ZRS) is a constituent part of the first shaft (W1P4) of the auxiliary gear set (ZRS) and is connected to the rotor (R), wherein the carrier (St-P4) of the planetary gear set (P4) of the auxiliary gear set (ZRS) is connected to the sun gear (So-P1) of the first planetary gear set (P1) of the main gear set (HRS) and to the sun gear (So-P2) of the second planetary gear set (P2) of the main gear set (HRS) and is thus a constituent part of the second shaft (W2P4) of the auxiliary gear set (ZRS) and of the first shaft (W1) of the main gear set (HRS), wherein the internal gear (HoP4) of the planetary gear set (P4) of the auxiliary gear set (ZRS) is connected to the internal gear (HoP1) of the first planetary gear set (P1) of the main gear set (HRS) and is thus a constituent part of the third shaft (W3P4) of the auxiliary gear set (ZRS) and of the fourth shaft (W4) of the main gear set (HRS), wherein the carrier (St-P2) of the second planetary gear set (P2) of the main gear set (HRS) is a constituent part of the second shaft (W2) of the main gear set (HRS), and wherein the carrier (St-P1) of the first planetary gear set (P1) of the main gear set (HRS) is connected to the internal gear (Ho-P2) of the second planetary gear set (P2) of the main gear set (HRS) and is thus a constituent part of the third shaft (W3) of the main gear set (HRS) and of the gearbox output shaft (GW2).

12. Gearbox (G) according to one of Claims 1 to 3, **characterized in that** the planetary gear set (P4) of the auxiliary gear set (ZRS) and the first and second planetary gear sets (P1, P2) of the main gear set (HRS) are formed as minus gear sets, wherein the sun gear (So-P4) of the planetary gear set (P4) of the auxiliary gear set (ZRS) is a constituent part of the first shaft (W1P4) of the auxiliary gear set (ZRS) and is connected to the rotor (R), wherein the carrier (St-P4) of the planetary gear set (P4) of the auxiliary gear set (ZRS) is connected to the carrier (St-P1) of the first planetary gear set (P1) of the main gear set (HRS) and to the internal gear (Ho-P2) of the second planetary gear set (P2) of the main gear set (HRS) and is thus a constituent part of the second shaft (W2P4) of the auxiliary gear set (ZRS), of the third shaft (W3) of the main gear set (HRS) and of the gearbox output shaft (GW2), wherein the internal gear (Ho-P4) of the planetary gear set (P4) of the auxiliary gear set (ZRS) is connected to the internal gear (Ho-P1) of the first planetary gear set (P1) of the main gear set (HRS) and is thus a constituent part of the third shaft (W3P4) of the auxiliary gear set (ZRS) and of the fourth shaft (W4) of the main gear set (HRS), wherein the sun gear (So-P1) of the first planetary gear set (P1) of the main gear set (HRS) is connected to the sun gear (SoP2) of the second planetary gear set (P2) of the main gear set (HRS) and is thus a constituent part of the first shaft (W1) of the main gear set (HRS), and wherein the carrier (St-P2) of the second planetary gear set (P2) of the main gear set (HRS) is a constituent part of the second shaft (W2) of the main gear set (HRS).

13. Gearbox (G) according to Claim 12, **characterized in that** the fixed carrier transmission ratios of the planetary gear set (P4) of the auxiliary gear set (ZRS) and of the first and second planetary gear sets (P1, P2) of the main gear set (HRS) are selected such that the first shaft (W1) of the main gear set (HRS) lies between the first shaft (W1P4) of the auxiliary gear set (ZRS) and the second shaft (W2) of the main gear set (HRS) in the rotational speed plan.

14. Hybrid drivetrain for a motor vehicle, wherein the hybrid drivetrain has at least one internal combustion engine (VKM), **characterized in that** the hybrid drivetrain has a gearbox (G) according to one of Claims 1 to 13.

15. Hybrid drivetrain according to Claim 14, **characterized in that** the hybrid drivetrain has at least one auxiliary electric machine (SG) which is connected to the internal combustion engine (VKM) directly or via a gearbox, which auxiliary electric machine is configured for starting the internal combustion engine (VKM), wherein a rotor (R2) of the auxiliary electric machine (SG) is connected to the gearbox input shaft (GW1) of the gearbox (G).

16. Drivetrain for an electric vehicle, **characterized in that** the drivetrain has a gearbox (G) according to one of Claims 1 to 13.

## Revendications

1. Boîte de vitesses (G) comprenant un arbre d'entrée de boîte de vitesses (GW1) et un arbre de sortie de boîte de vitesses (GW2), un train de roues principal (HRS), un train de roues supplémentaire (ZRS), et une machine électrique (EM) avec un rotor (R) et un stator (S), la boîte de vitesses (G) présentant un premier chemin de puissance (L1) et un deuxième chemin de puissance (L2) entre l'arbre d'entrée de boîte de vitesses (GW1) et le train de roues principal (HRS), le train de roues principal (HRS) présentant un premier et un deuxième train planétaire (P1, P2), comprenant au total quatre arbres (W1, W2, W3, W4) désignés dans l'ordre des vitesses de rotation par premier, deuxième, troisième et quatrième arbres, le premier chemin de puissance (L1) pouvant être connecté par le biais d'un premier élément de commutation (A) au quatrième arbre (W4) du train de roues principal (HRS) et par le biais d'un deuxième élément de commutation (E) au deuxième arbre (W2) du train de roues principal (HRS), le deuxième chemin de puissance (L2) pouvant être connecté par le biais d'un troisième élément de commutation (B) au premier arbre (W1) du train de roues principal (HRS) et par le biais d'un quatrième élément de commutation (D) au deuxième arbre (W2) du train de roues principal (HRS), le troisième arbre (W3) du train de roues principal (HRS) étant connecté à l'arbre de sortie de boîte de vitesses (GW2), le train de roues supplémentaire (ZRS) présentant un train planétaire (P4) avec un premier, deuxième et troisième arbre (W1P4, W2P4, W3P4), et le premier arbre (W1P4) du train de roues supplémentaire (ZRS) étant connecté de manière permanente au rotor (R), le deuxième arbre (W2P4) du train de roues supplémentaire (ZRS) étant connecté de manière permanente au premier ou au troisième arbre (W1, W3) du train de roues principal (HRS), **caractérisée en ce que**
- dans le cas où le deuxième arbre (W2P4) du train de roues supplémentaire (ZRS) est connecté au premier arbre (W1) du train de roues principal (HRS), le troisième arbre (W3P4) du train de roues supplémentaire (ZRS) est connecté de manière permanente au troisième ou au quatrième arbre (W3, W4) du train de roues principal (HRS), et
- dans le cas où le deuxième arbre (W2P4) du train de roues supplémentaire (ZRS) est connecté au troisième arbre (W3) du train de roues principal (HRS), le troisième arbre (W3P4) du train de roues supplémentaire (ZRS) est connecté de manière permanente au quatrième arbre (W4) du train de roues principal (HRS).

2. Boîte de vitesses (G) selon la revendication 1, **caractérisée en ce que**, lorsque le deuxième arbre (W2P4) du train de roues supplémentaire (ZRS) est connecté au troisième arbre (W3) du train de roues principal (HRS), la démultiplication de la boîte de vitesses à arbres fixes du train planétaire (P4) du train de roues supplémentaire (ZRS) est choisie de telle sorte que le premier arbre (W1) du train de roues principal (HRS) soit situé dans le plan de vitesse de rotation entre le premier arbre (W1P4) du train de roues supplémentaire (ZRS) et le deuxième arbre (W2) du train de roues principal (HRS).

3. Boîte de vitesses (G) selon la revendication 1 ou 2, **caractérisée en ce qu'**une roue solaire (So-P4) du train planétaire (P4) du train de roues supplémentaire (ZRS) fait partie du premier arbre (W1P4) du train de roues supplémentaire (ZRS), et
- dans le cas où le train planétaire (P4) du train de roues supplémentaire (ZRS) est réalisé sous forme de train négatif, un porte-satellites (St-P4) du train planétaire (P4) du train de roues supplémentaire (ZRS) fait partie du deuxième arbre (W2P4) du train de roues supplémentaire (ZRS) et une couronne dentée (Ho-P4) du train planétaire (P4) du train de roues supplémentaire (ZRS) fait partie du troisième arbre (W3P4) du train de roues supplémentaire (ZRS), et
- dans le cas où le train planétaire (P4) du train de roues supplémentaire (ZRS) est réalisé sous forme de train positif, la couronne dentée (Ho-P4) du train planétaire (P4) du train de roues supplémentaire (ZRS) fait partie du deuxième arbre (W2P4) du train de roues supplémentaire (ZRS) et le porte-satellites (St-P4) du train planétaire (P4) du train de roues supplémentaire (ZRS) fait partie du troisième arbre (W3P4) du train de roues supplémentaire (ZRS).

4. Boîte de vitesses (G) selon l'une quelconque des revendications précédentes, **caractérisée en ce que** le premier arbre (W1) du train de roues principal (HRS) peut être fixé de manière solidaire en rotation par un cinquième élément de commutation (C), et **en ce que** le quatrième arbre (W4) du train de roues principal (HRS) peut être fixé de manière solidaire en rotation par un sixième élément de commutation (F).

5. Boîte de vitesses (G) selon l'une quelconque des revendications précédentes, **caractérisée en ce que** le premier et le deuxième train planétaire (P1, P2) du train de roues principal (HRS) sont réalisés sous forme de trains négatifs, le premier arbre (W1) du train de roues principal (HRS) étant connecté à une roue solaire (So-P1) du premier train planétaire (P1) du train de roues principal (HRS) et à une roue solaire (So-P2) du deuxième train planétaire (P2) du train de roues principal (HRS), le deuxième arbre (W2) du train de roues principal (HRS) étant connecté à un porte-satellites (St-P2) du deuxième train planétaire (P2) du train de roues principal (HRS), le troisième arbre (W3) du train de roues principal (HRS) étant connecté à un porte-satellites (St-P1) du premier train planétaire (P1) du train de roues principal (HRS) et à une couronne dentée (Ho-P2) du deuxième train planétaire (P2) du train de roues principal (HRS), et le quatrième arbre (W4) du train de roues principal (HRS) étant connecté à une couronne dentée (Ho-P1) du premier train planétaire (P1) du train de roues principal (HRS).

6. Boîte de vitesses (G) selon la revendication 5, **caractérisée en ce que** la couronne dentée (Ho-P1) du premier train planétaire (P1) du train de roues principal (HRS) se compose d'un premier et d'un deuxième segment (Ho-P1-1, Ho-P1-2).

7. Boîte de vitesses (G) selon la revendication 6, **caractérisée en ce qu'**entre le premier et le deuxième segment (Ho-P1-1, Ho-P1-2) est disposée une portion du troisième arbre (W3) du train de roues principal (HRS), de sorte qu'une portion du troisième arbre (W3) du train de roues principal (HRS) puisse être guidée radialement vers l'extérieur entre le premier et le deuxième segment (Ho-P1-1, Ho-P1-2).

8. Boîte de vitesses (G) selon l'une quelconque des revendications 4 à 7, **caractérisée en ce que** le premier, deuxième, troisième, quatrième, cinquième et sixième élément de commutation (A, B, C, D, E, F) sont réalisés sous forme d'éléments de commutation à griffes.

9. Boîte de vitesses (G) selon l'une quelconque des revendications 4 à 8, **caractérisée en ce que** par engagement sélectif par paires des six éléments de commutation (A, B, C, D, E, F), huit vitesses de marche avant (1VM-8VM) peuvent être réalisées, la première vitesse de marche avant (1VM) étant obtenue par fermeture du troisième élément de commutation (B) et du sixième élément de commutation (F), la deuxième vitesse de marche avant (2VM) étant obtenue par fermeture du quatrième élément de commutation (D) et du sixième élément de commutation (F), la troisième vitesse de marche avant (3VM) étant obtenue par fermeture du troisième élément de commutation (B) et du quatrième élément de commutation (D), la quatrième vitesse de marche avant (4VM) étant obtenue par fermeture du quatrième élément de commutation (D) et du premier élément de commutation (A), la cinquième vitesse de marche avant (5VM) étant obtenue par fermeture du troisième élément de commutation (B) et du premier élément de commutation (A), la sixième vitesse de marche avant (6VM) étant obtenue par fermeture du deuxième élément de commutation (E) et du premier élément de commutation (A), la septième vitesse de marche avant (7VM) étant obtenue par fermeture du troisième élément de commutation (B) et du deuxième élément de commutation (E), et la huitième vitesse de marche avant (8VM) étant obtenue par fermeture du cinquième élément de commutation (C) et du deuxième élément de commutation (E) .

10. Boîte de vitesses (G) selon l'une quelconque des revendications 1 à 3, **caractérisée en ce que** le train planétaire (P4) du train de roues supplémentaire (ZRS) et le premier et le deuxième train planétaire (P1, P2) du train de roues principal (HRS) sont réalisés sous forme de trains négatifs, la roue solaire (So-P4) du train planétaire (P4) du train de roues supplémentaire (ZRS) faisant partie du premier arbre (W1P4) du train de roues supplémentaire (ZRS) et étant connectée au rotor (R), le porte-satellites (St-P4) du train planétaire (P4) du train de roues supplémentaire (ZRS) étant connecté à la roue solaire (So-P1) du premier train planétaire (P1) du train de roues principal (HRS) et à la roue solaire (So-P2) du deuxième train planétaire (P2) du train de roues principal (HRS) et faisant ainsi partie du deuxième arbre (W2P4) du train de roues supplémentaire (ZRS) et du premier arbre (W1) du train de roues principal (HRS), la couronne dentée (Ho-P4) du train planétaire (P4) du train de roues supplémentaire (ZRS) étant connectée au porte-satellites (St-P1) du premier train planétaire (P1) du train de roues principal (HRS) et à la couronne dentée (Ho-P2) du deuxième train planétaire (P2) du train de roues principal (HRS), et faisant ainsi partie du troisième arbre (W3P4) du train de roues supplémentaire (ZRS), du troisième arbre (W3) du train de roues principal (HRS) et de l'arbre de sortie de boîte de vitesses (GW2), la couronne dentée (Ho-P1) du premier train planétaire (P1) du train de roues principal (HRS) faisant partie du quatrième arbre (W4) du train de roues principal (HRS), et le porte-satellites (St-P2) du deuxième train planétaire (P2) du train de roues principal (HRS) faisant partie du deuxième arbre (W2) du train de roues principal (HRS).

11. Boîte de vitesses (G) selon l'une quelconque des revendications 1 à 3, **caractérisée en ce que** le train planétaire (P4) du train de roues supplémentaire (ZRS) et le premier et le deuxième train planétaire (P1, P2) du train de roues principal (HRS) sont réalisés sous forme de trains négatifs, la roue solaire (So-P4) du train planétaire (P4) du train de roues supplémentaire (ZRS) faisant partie du premier arbre (W1P4) du train de roues supplémentaire (ZRS) et étant connectée au rotor (R), le porte-satellites (St-P4) du train planétaire (P4) du train de roues supplémentaire (ZRS) étant connecté à la roue solaire (So-P1) du premier train planétaire (P1) du train de roues principal (HRS) et à la roue solaire (So-P2) du deuxième train planétaire (P2) du train de roues principal (HRS) et faisant ainsi partie du deuxième arbre (W2P4) du train de roues supplémentaire (ZRS) et du premier arbre (W1) du train de roues principal (HRS), la couronne dentée (Ho-P4) du train planétaire (P4) du train de roues supplémentaire (ZRS) étant connectée à la couronne dentée (Ho-P1) du premier train planétaire (P1) du train de roues principal (HRS) et faisant ainsi partie du troisième arbre (W3P4) du train de roues supplémentaire (ZRS) et du quatrième arbre (W4) du train de roues principal (HRS), le porte-satellites (St-P2) du deuxième train planétaire (P2) du train de roues principal (HRS) faisant partie du deuxième arbre (W2) du train de roues principal (HRS), et le porte-satellites (St-P1) du premier train planétaire (P1) du train de roues principal (HRS) étant connecté à la couronne dentée (Ho-P2) du deuxième train planétaire (P2) du train de roues principal (HRS) et faisant ainsi partie du troisième arbre (W3) du train de roues principal (HRS) et de l'arbre de sortie de boîte de vitesses (GW2).

12. Boîte de vitesses (G) selon l'une quelconque des revendications 1 à 3, **caractérisée en ce que** le train planétaire (P4) du train de roues supplémentaire (ZRS) et le premier et le deuxième train planétaire (P1, P2) du train de roues principal (HRS) sont réalisés sous forme de trains négatifs, la roue solaire (So-P4) du train planétaire (P4) du train de roues supplémentaire (ZRS) faisant partie du premier arbre (W1P4) du train de roues supplémentaire (ZRS) et étant connectée au rotor (R), le porte-satellites (St-P4) du train planétaire (P4) du train de roues supplémentaire (ZRS) étant connecté au porte-satellites (St-P1) du premier train planétaire (P1) du train de roues principal (HRS) et à la couronne dentée (Ho-P2) du deuxième train planétaire (P2) du train de roues principal (HRS) et faisant ainsi partie du deuxième arbre (W2P4) du train de roues supplémentaire (ZRS), du troisième arbre (W3) du train de roues principal (HRS) et de l'arbre de sortie de boîte de vitesses (GW2), la couronne dentée (Ho-P4) du train planétaire (P4) du train de roues supplémentaire (ZRS) étant connectée à la couronne dentée (Ho-P1) du premier train planétaire (P1) du train de roues principal (HRS) et faisant ainsi partie du troisième arbre (W3P4) du train de roues supplémentaire (ZRS) et du quatrième arbre (W4) du train de roues principal (HRS), la roue solaire (So-P1) du premier train planétaire (P1) du train de roues principal (HRS) étant connectée à la roue solaire (So-P2) du deuxième train planétaire (P2) du train de roues principal (HRS) et faisant ainsi partie du premier arbre (W1) du train de roues principal (HRS), et le porte-satellites (St-P2) du deuxième train planétaire (P2) du train de roues principal (HRS) faisant partie du deuxième arbre (W2) du train de roues principal (HRS).

13. Boîte de vitesses (G) selon la revendication 12, **caractérisée en ce que** les démultiplications de la boîte de vitesses à arbres fixes du train planétaire (P4) du train de roues supplémentaire (ZRS) et du premier et du deuxième train planétaire (P1, P2) du train de roues principal (HRS) sont choisies de telle sorte que le premier arbre (W1) du train de roues principal (HRS) soit situé dans le plan de vitesse de rotation entre le premier arbre (W1P4) du train de roues supplémentaire (ZRS) et le deuxième arbre (W2) du train de roues principal (HRS).

14. Chaîne cinématique hybride pour un véhicule automobile, la chaîne cinématique hybride présentant au moins un moteur à combustion interne (VKM), **caractérisée en ce que** la chaîne cinématique hybride présente une boîte de vitesses (G) selon l'une quelconque des revendications 1 à 13.

15. Chaîne cinématique hybride selon la revendication 14, **caractérisée en ce que** la chaîne cinématique hybride présente au moins une machine électrique supplémentaire (SG) connectée au moteur à combustion interne (VKM) directement ou par le biais d'une boîte de vitesses, qui est prévue pour faire démarrer le moteur à combustion interne (VKM), un rotor (R2) de la machine électrique supplémentaire (SG) étant connecté à l'arbre d'entrée de boîte de vitesses (GW1) de la boîte de vitesses (G).

16. Chaîne cinématique pour un véhicule électrique, **caractérisée en ce que** la chaîne cinématique présente une boîte de vitesses (G) selon l'une quelconque des revendications 1 à 13.
